(19) Europäisches Patentamt
European Patent Office
Office européen des brevets

(11) **EP 4 066 340 B1**

(12) **FASCICULE DE BREVET EUROPEEN**

(45) Date de publication et mention
de la délivrance du brevet:
**03.01.2024 Bulletin 2024/01**

(21) Numéro de dépôt: **20824308.9**

(22) Date de dépôt: **26.11.2020**

(51) Classification Internationale des Brevets (IPC):
*H02J 3/14* (2006.01)    *H02J 13/00* (2006.01)
*F24H 3/00* (2022.01)    *H02J 15/00* (2006.01)

(52) Classification Coopérative des Brevets (CPC):
**H02J 3/14; H02J 13/00004; H02J 15/00;**
F24H 3/00; H02J 2300/30; H02J 2310/12;
H02J 2310/66; Y02B 70/30; Y02B 70/3225;
Y02B 90/20; Y04S 20/12; Y04S 20/222;
Y04S 20/244

(86) Numéro de dépôt international:
**PCT/FR2020/052187**

(87) Numéro de publication internationale:
**WO 2021/105621 (03.06.2021 Gazette 2021/22)**

(54) **MICRO-RÉSEAU RÉSILIENT D'APPAREILS DE CHAUFFAGE DE TYPE RADIATEUR ÉLECTRIQUE**

ROBUSTES MIKRONETZWERK FÜR ELEKTRISCHE STRAHLUNGSHEIZGERÄTE

RESILIENT MICRO-NETWORK OF ELECTRICAL RADIATOR-TYPE HEATING APPLIANCES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.11.2019 FR 1913291**

(43) Date de publication de la demande:
**05.10.2022 Bulletin 2022/40**

(73) Titulaire: **Lancey Energy Storage
38000 Grenoble (FR)**

(72) Inventeur: **CHATILLON, Yohann
38430 St jean de moirans (FR)**

(74) Mandataire: **Germain Maureau
12, rue Boileau
69006 Lyon (FR)**

(56) Documents cités:
**EP-A1- 3 413 431     WO-A1-2019/097130
CN-B- 102 623 991     CN-U- 207 612 124**

## Description

## Domaine technique de l'invention

La présente invention concerne un micro-réseau comportant au moins :

- un premier appareil de chauffage comprenant un premier dispositif de stockage d'énergie électrique apte à être rechargé par une source d'alimentation d'énergie électrique, au moins un premier organe de chauffe apte à être alimenté à partir de la source d'alimentation électrique et/ou à partir du premier dispositif de stockage d'énergie électrique, et un premier module de communication,
- un deuxième appareil de chauffage comprenant un deuxième dispositif de stockage d'énergie électrique apte à être rechargé par la source d'alimentation d'énergie électrique, au moins un deuxième organe de chauffe apte à être alimenté à partir de la source d'alimentation électrique et/ou à partir du deuxième dispositif de stockage d'énergie électrique, et un deuxième module de communication.

L'invention concerne aussi une installation électrique comprenant une source d'alimentation électrique et au moins un tel micro-réseau.

Dans la suite, la source d'alimentation électrique peut comporter un réseau électrique délivrant une tension alternative et/ou tout ou partie des éléments suivants aptes à délivrer une tension continue : des panneaux photovoltaïques, une pile à combustible, une supercapacité, une batterie à base d'un assemblage de cellules électrochimiques, une éolienne.

## Etat de la technique

La contribution croissante des sources d'énergie renouvelables et décentralisées, dans le réseau moyenne et basse tension de distribution de l'électricité, pose de nouveaux défis techniques aux gestionnaires de réseaux. En particulier, dans le cas de réseaux électriques intelligents (couramment désignés par le terme anglo-saxon « smart grids »), l'intermittence de la disponibilité de ces sources d'énergie ainsi que la variabilité de la puissance produite par ces dernières doivent être prises en compte et optimisées, afin d'assurer un équilibre entre la production d'énergie et sa consommation par des équipements connectés à ces réseaux.

Pour répondre à ces exigences d'équilibre, les gestionnaires de réseaux ont mis en place des offres contractuelles de gestion de réserves de capacités grâce auxquelles, à échéances variables, des capacités additionnelles mises à disposition par des producteurs d'énergie peuvent être sollicitées et/ou des limitations de consommations peuvent être imposées selon un schéma préétabli. Ainsi, dans ce mode de gestion, on distingue habituellement la réserve primaire (une énergie disponible en quelques secondes), la réserve secondaire (une énergie disponible en quelques minutes) et la réserve tertiaire (une énergie disponible ou une réduction de la consommation d'énergie à une échéance plus longue que la réserve primaire et secondaire, généralement plus de 15 minutes).

À l'échelle de l'habitat individuel, il a été proposé de faire participer certains équipements couplés au réseau électrique à cette gestion de réserves de capacités.

On connaît ainsi du document EP-B1-2735067 la mesure et la modulation, en temps réel, de la consommation électrique d'un site, la consommation électrique d'un ou plusieurs appareils étant interrompue, lorsque cela est nécessaire. Cependant, cette solution nécessite l'installation d'un boîtier (généralement disposé au niveau du tableau électrique d'un site consommateur/producteur dont on souhaite effacer au moins en partie la consommation), afin de réaliser des mesures sur le réseau électrique du site, et de commander les appareils susceptibles d'être interrompus. En outre, elle impose au consommateur une interruption de service non maîtrisable par ce dernier. Cette solution n'est donc pas adaptée, en particulier aux logements équipés d'un chauffage fonctionnant au moyen d'électricité tel que les systèmes de pompe à chaleur, les radiateurs électriques, du fait de l'inconfort engendré par ces interruptions inopinées ainsi que de l'impossibilité de gérer de manière optimisée la dynamique thermique du logement.

Le document EP-B1-2961032 propose de gérer le partage de ressources entre des équipements producteur et/ou consommateur, en couplant, à un équipement du réseau, un module pour analyser des données internes de l'équipement, calculer sa capacité intrinsèque de modulation, et émettre en conséquence, une offre de modulation. Cette solution requiert également l'installation d'un module sur chacun des équipements susceptibles de participer au mécanisme de capacité. De même, chaque équipement effacé ne fournit plus de service : cette solution n'est donc pas non plus adaptée aux logements équipés d'un chauffage fonctionnant au moyen d'électricité.

On identifiera enfin le document WO2019/097130 A1 publié le 23 mai 2019, qui décrit un appareil de chauffage comprenant un dispositif de stockage et au moins un organe de chauffe. L'organe de chauffe pouvant être relié au dispositif de stockage et à une source d'alimentation électrique.

## Objet de l'invention

La présente invention vise à résoudre tout ou partie des inconvénients listés ci-dessus.

Dans ce contexte, les demandes de brevet EP-A1-3384727 et FR-A1-3059199 ont été déposées par la Demanderesse, et proposent l'utilisation d'un radiateur électrique pourvu d'un dispositif de stockage d'énergie électrique et d'un organe de chauffe apte à être alimenté depuis une source d'alimentation en énergie électrique (pouvant inclure un réseau électrique en courant alternatif et/ou des éléments fournissant un courant continu) et/ou par le dispositif de stockage d'énergie électrique. Un tel radiateur électrique est non seulement capable de fournir une puissance électrique pour couvrir ses propres besoins, mais également au réseau électrique auquel il est connecté, afin notamment d'alimenter d'autres dispositifs consommateurs locaux. L'usage de l'énergie stockée par un tel radiateur électrique permet également, lors d'une période d'effacement d'une consommation, d'assurer une continuité de service, ce qui s'avère être particulièrement avantageux pour un système de chauffage d'une habitation ou d'un bâtiment.

La présente invention vise à fournir des moyens supplémentaires pour améliorer l'efficacité de la gestion des flux d'énergie pour un site dans lequel est déployée une pluralité de radiateurs électriques chacun pourvu d'un dispositif de stockage d'énergie électrique et d'un organe de chauffe apte à être alimenté par une source d'alimentation en énergie électrique et/ou par le dispositif de stockage d'énergie. Par « site », on entend un espace dans lequel une source d'alimentation en énergie électrique est déployée et dans lequel est installée la pluralité d'appareils de chauffage, typiquement un logement, une maison, un immeuble, ou encore un quartier.

La présente invention vise également à fournir des moyens résilients aptes à supporter la défaillance ou l'indisponibilité temporaire d'un ou plusieurs équipements.

La présente invention permet d'optimiser plus généralement la gestion de l'énergie dans un réseau électrique.

C'est pourquoi il existe encore un besoin pour fournir un micro-réseau résilient d'appareils de chauffage où au moins une partie de ces appareils de chauffage est pourvue d'un dispositif de stockage d'énergie électrique et d'un organe de chauffe apte à être alimenté sélectivement par la source d'alimentation en énergie électrique et/ou par le dispositif de stockage d'énergie, qui soit simple, économique, fiable, facile à mettre en oeuvre, et permettant de ne pas interrompre la fonction de chauffage des appareils de chauffage du micro-réseau.

À cet effet, selon un premier aspect, il est proposé un micro-réseau comportant au moins :

- un premier appareil de chauffage comprenant un premier dispositif de stockage d'énergie électrique apte à être rechargé à partir d'une source d'alimentation électrique, au moins un premier organe de chauffe apte à être alimenté à partir de la source d'alimentation électrique et/ou à partir du premier dispositif de stockage d'énergie électrique, et un premier module de communication,
- un deuxième appareil de chauffage comprenant un deuxième dispositif de stockage d'énergie électrique apte à être rechargé à partir de la source d'alimentation électrique, au moins un deuxième organe de chauffe apte à être alimenté à partir de la source d'alimentation électrique et/ou à partir du deuxième dispositif de stockage d'énergie électrique, et un deuxième module de communication,
- un module de supervision apte à communiquer au moins avec le deuxième module de communication,

micro-réseau dans lequel :

i) le premier module de communication est configuré pour :

- obtenir, et transmettre au deuxième module de communication, un premier ensemble de données comportant :

  - au moins une mesure relative à une consommation électrique du premier appareil de chauffage où ladite consommation électrique du premier appareil de chauffage est une quantité d'énergie électrique transmise au premier appareil de chauffage par la source d'alimentation électrique,
  - au moins une mesure relative à une production électrique du premier appareil de chauffage où ladite production électrique du premier appareil de chauffage est une quantité d'énergie électrique consommée par le premier appareil de chauffage à partir du premier dispositif de stockage d'énergie électrique,
  - et au moins une mesure relative à un état de charge réel du premier dispositif de stockage d'énergie électrique,

- commander l'alimentation du premier organe de chauffe à partir du premier dispositif de stockage d'énergie électrique et/ou à partir de la source d'énergie électrique en tenant compte de la mesure relative à l'état de charge réel du premier dispositif de stockage d'énergie électrique et d'une première consigne d'état de charge relative à un état de charge cible du premier dispositif de stockage d'énergie électrique, ii) le deuxième module de communication est configuré de sorte à :

  - obtenir, et transmettre au module de supervision, le premier ensemble de données,
  - obtenir et transmettre au module de supervision, un deuxième ensemble de données disctinct du premier ensemble de données, le deuxième ensemble de données

comportant au moins une donnée relative à la source d'alimentation électrique et au moins une mesure relative à un état de charge réel du deuxième dispositif de stockage d'énergie électrique,

- recevoir à partir du module de supervision, et transmettre au premier module de communication, ladite première consigne d'état de charge,
- recevoir, à partir du module de supervision, une deuxième consigne d'état de charge relative à un état de charge cible du deuxième dispositif de stockage d'énergie électrique,
- commander l'alimentation du deuxième organe de chauffe à partir du deuxième dispositif de stockage d'énergie électrique et/ou à partir de la source d'énergie électrique en tenant compte de la mesure relative à l'état de charge réel du deuxième dispositif de stockage d'énergie électrique et de la deuxième consigne d'état de charge, iii) le module de supervision est configuré de sorte à:

- recevoir le premier ensemble de données et le deuxième ensemble de données,
- générer à partir du premier ensemble de données et du deuxième ensemble de données, et transmettre au deuxième module de communication, la première consigne d'état de charge et la deuxième consigne d'état de charge.

Selon un mode de réalisation particulier, le premier module de communication est configuré pour commander l'alimentation du premier organe de chauffe à partir du premier dispositif de stockage d'énergie électrique à la réception d'un ordre d'effacement, tandis que le deuxième module de communication est configuré de sorte à transmettre, à la réception de l'ordre d'effacement à destination du premier module de communication, ledit ordre d'effacement au premier module de communication, le module de supervision étant configuré de sorte à vérifier si au moins une condition d'effacement du premier appareil de chauffage est satisfaite en fonction du premier ensemble de données et du deuxième ensemble de données, et lorsque la condition d'effacement est satisfaite, transmettre au deuxième module de communication ledit ordre d'effacement à destination du premier module de communication.

Ainsi, le module de supervision peut émettre des ordres d'effacements optimisés aux appareils de chauffage du micro-réseau, en tenant compte de données propres à chacun des appareils de chauffage - telle que sa consommation électrique, son état de charge - et à des données relatives au réseau électrique de la source d'énergie électrique - consommation totale actuelle, production actuelle, grille tarifaire, etc.

Le premier et le deuxième ensemble de données peuvent être collectés en temps réel, c'est-à-dire reçu par le module de supervision typiquement en moins de 2 ou 3 secondes après l'obtention de la mesure ou donnée correspondante, et avec une fréquence de l'ordre d'une collecte du premier et du deuxième ensemble de données toutes les 1 à 10 secondes. L'invention permet donc un suivi adapté à la tâche d'optimisation de la gestion d'énergie de la source d'énergie électrique du site, car elle permet d'obtenir du module de supervision une bonne réactivité quant à la prise de décisions pertinentes pour le contexte énergétique et temporel considéré.

De plus, lorsqu'un ordre d'effacement est reçu par le premier module de communication, le premier organe de chauffe du premier appareil de chauffage auquel le premier module de communication est couplé cesse d'utiliser les ressources de la source d'énergie électrique et est alimenté au moyen du premier dispositif de stockage d'énergie électrique. La fonction de chauffage de l'appareil de chauffage concerné n'est donc pas interrompue.

En outre, le module de supervision peut prendre en compte l'ensemble des appareils de chauffage du micro-réseau ainsi que l'état et les contraintes du réseau électrique pour déterminer si la condition d'effacement du premier appareil de chauffage est remplie, ce qui permet de prendre des décisions informées par une vue globale des appareils de chauffage du micro-réseau et du réseau électrique.

Selon un mode de réalisation particulier, ladite au moins une condition d'effacement du premier appareil de chauffage comporte une condition suivant laquelle la mesure relative à l'état de charge réel du premier dispositif de stockage d'énergie électrique est au-dessus d'un seuil prédéterminé de charge du premier dispositif de stockage d'énergie électrique, fonction d'au moins l'une des données du premier ensemble de données et d'au moins l'une des données du deuxième ensemble de données.

Il est ainsi possible de prendre en compte non seulement les caractéristiques propres du premier appareil de chauffage, tel que la technologie du premier dispositif de stockage d'énergie électrique ou son état de charge, mais également d'adapter dynamiquement ce seuil en fonction de contraintes externes au premier appareil de chauffage, tel que des contraintes relatives à la source d'énergie électrique.

Selon un mode de réalisation particulier, le premier appareil de chauffage est configuré de sorte à alimenter le premier organe de chauffe à partir de la source d'énergie électrique tant que la mesure relative à l'état de charge réel du premier dispositif de stockage d'énergie électrique est en dessous d'un niveau prédéterminé de décharge et tant que l'ordre d'effacement n'est pas reçu.

Ainsi, lorsqu'aucun ordre d'effacement n'est reçu du module de supervision (par exemple lorsque ce dernier est indisponible ou défaillant), un mode de fonctionnement par défaut peut être mis en oeuvre, améliorant le fonctionnement général du micro-réseau et sa résistance aux défaillances d'équipements.

Selon un mode de réalisation particulier, le premier module de communication est configuré pour, sur réception d'un ordre de recharge, assurer la recharge du premier dispositif de stockage d'énergie électrique à partir de la source d'énergie électrique, tandis que le deuxième module de communication est configuré de sorte à transmettre, à la réception dudit ordre de recharge à destination du premier module de communication, ledit ordre de recharge au premier module de communication, le module de supervision étant configuré de sorte à vérifier si au moins une condition de recharge du premier dispositif de stockage d'énergie électrique est satisfaite en fonction du premier ensemble de données et du deuxième ensemble de données, et lorsque la condition de recharge est satisfaite, transmettre au deuxième module de communication ledit ordre de recharge à destination du premier module de communication.

Selon un mode de réalisation particulier, ladite au moins une condition de recharge du premier dispositif de stockage d'énergie électrique comporte une condition suivant laquelle la mesure relative à l'état de charge réel du premier dispositif de stockage d'énergie électrique est en dessous d'une valeur seuil prédéterminée de charge du premier dispositif de stockage d'énergie électrique fonction d'au moins l'une des données du premier ensemble de données et d'au moins l'une des données du deuxième ensemble de données.

Ainsi, le module de supervision peut émettre des ordres de recharge optimisés pour les appareils de chauffage du micro-réseau, en tenant compte de données propres à chacun des appareils de chauffage (telles que sa consommation électrique, ses capacités de production, son état de charge) et à des données relatives à la source d'énergie électrique (consommation totale actuelle, production actuelle, grille tarifaire, etc). Il est possible de prendre en compte non seulement les caractéristiques propres du premier appareil de chauffage, tel que la technologie du dispositif de de stockage d'énergie électrique ou son état de charge, mais également d'adapter dynamiquement cette valeur seuil en fonction de contraintes externes au premier appareil de chauffage, tel que des contraintes relatives à la source d'énergie électrique.

Selon un mode de réalisation particulier, lequel le premier appareil de chauffage est configuré de sorte à alimenter le premier organe de chauffe à partir du premier dispositif de stockage d'énergie électrique tant que la mesure relative à l'état de charge réel du premier dispositif de stockage d'énergie électrique est au-dessus d'un niveau prédéterminé de charge et tant que l'ordre de charge n'est pas reçu.

Ainsi, lorsqu'aucun ordre de charge n'est reçu du module de supervision (par exemple lorsque ce dernier est indisponible ou défaillant), un mode de fonctionnement par défaut peut être mis en oeuvre, améliorant le fonctionnement général du micro-réseau et sa résistance aux défaillances d'équipements.

Selon un mode de réalisation particulier, le premier ensemble de données comporte au moins une des données choisie parmi la liste suivante : une information permettant d'identifier le premier appareil de chauffage sur le micro-réseau, une mesure de la puissance consommée par le premier appareil de chauffage, une mesure de la température de l'environnement du premier appareil de chauffage, une consigne de température, une information relative à la présence ou à l'absence d'un usager.

Il est notamment possible de prendre en compte les informations relatives à l'environnement des appareils de chauffage du micro-réseau (par exemple la température ambiante et la consigne de température), et optimiser la gestion de l'énergie sur le réseau électrique en conséquence.

Selon un mode de réalisation particulier, le deuxième module de communication est configuré pour communiquer avec le module de supervision par l'intermédiaire d'un premier point d'accès accessible via le micro-réseau, et le deuxième module de communication est configuré pour communiquer avec le module de supervision par l'intermédiaire d'un premier point d'accès de secours accessible via le micro-réseau, lorsque le premier point d'accès ne permet pas d'établir une connexion fonctionnelle avec le module de supervision.

En disposant d'un premier point d'accès de secours, il est possible d'améliorer le fonctionnement général du micro-réseau et sa résistance aux défaillances d'équipements, en disposant d'un autre accès en cas d'indisponibilité du premier point d'accès, et garantir la continuité des échanges avec le module de supervision.

Selon un mode de réalisation particulier, le deuxième module de communication est apte, par l'intermédiaire d'un deuxième point d'accès accessible via le micro-réseau, à recevoir des données d'un compteur électrique communicant déployé sur la source d'énergie électrique, le deuxième ensemble de données comportant au moins une donnée relative à la source d'énergie électrique obtenue à partir du compteur électrique communicant.

En ayant ainsi accès aux informations mises à disposition par le compteur électrique communicant déployé sur le réseau électrique, le module de supervision peut mettre à profit ces informations ainsi collectées pour émettre des ordres d'effacements optimisés aux appareils de chauffage du micro-réseau, en tenant compte de données dynamiques, spécifiques au réseau électrique et/ou au site.

Selon un mode de réalisation particulier, le deuxième module de communication est apte, par l'intermédiaire d'un troisième point d'accès accessible via le micro-réseau, à recevoir des données d'un dispositif de production d'électricité couplé à la source d'alimentation électrique et/ou d'un dispositif consommateur d'électricité alimenté par la source d'énergie électrique, le deuxième ensemble de données comportant au moins une donnée relative au dispositif de production et/ou au moins une donnée relative au dispositif de consommation.

Il est ainsi possible d'intégrer aux moyens de gestion optimisés de l'invention des données relatives aux dispositifs producteurs (tels que des panneaux solaires ou des réserves d'énergie) et aux dispositifs consommateurs couplés au réseau électrique, autres que les appareils de chauffage du micro-réseau, et susceptibles d'avoir un impact significatif sur l'énergie disponible dans le réseau électrique. La prise en compte de ces informations permet donc d'améliorer l'efficacité des émissions d'ordre de charge ou d'effacement, et donc d'encore améliorer la gestion énergétique globale du micro-réseau, en tenant compte d'équipements tiers déjà installés.

Selon un mode de réalisation particulier, le deuxième module de communication est configuré pour enregistrer le premier ensemble de données et/ou le deuxième ensemble de données, lorsque la transmission du premier ensemble de données et/ou du deuxième ensemble de données au module de supervision n'est pas possible, le deuxième module de communication étant configuré pour transmettre le premier ensemble de données tel qu'enregistré et/ou le deuxième ensemble de données tel qu'enregistré, une fois rétablie la possibilité de transmission du premier ensemble de données et/ou du deuxième ensemble de données au module de supervision.

En mettant à disposition un mode de gestion dégradé en cas de défaillance du module de supervision ou des moyens de communication permettant de transmettre des données au module de supervision, il est possible de transmettre ultérieurement toutes les données recueillies, et ainsi de ne pas perdre de données historiques significatives pour l'émission des ordres de charge ou d'effacement. La fiabilité de la gestion d'énergie se trouve donc améliorée ainsi que la résistance du micro-réseau face aux défaillances d'équipements.

Selon un mode de réalisation particulier, le micro-réseau comporte encore un troisième appareil de chauffage pourvu d'un troisième module de communication configuré pour communiquer avec le module de supervision par l'intermédiaire d'un point d'accès secondaire accessible via le micro-réseau, le deuxième module de communication étant configuré pour transmettre au troisième module de communication le premier ensemble de données et le deuxième ensemble de données, lorsque le deuxième module de communication ne peut pas transmettre au module de supervision le premier ensemble de données et le deuxième ensemble de données, le troisième module de communication étant configuré de sorte à :

- obtenir, et transmettre au module de supervision par l'intermédiaire du point d'accès secondaire, le premier ensemble de données et le deuxième ensemble de données,
- transmettre, sur réception de l'ordre d'effacement à destination du premier module de communication par l'intermédiaire du point d'accès secondaire, ledit ordre d'effacement au premier module de communication.

En mettant à disposition un tel mécanisme de bascule vers le troisième module de communication en cas d'indisponibilité des moyens de communication du deuxième module de communication vers le mode de gestion, il est possible de transmettre immédiatement toutes les données recueillies, et ainsi de ne pas perdre de données significatives pour l'émission des ordres de charge ou d'effacement. La disponibilité de la gestion d'énergie se trouve donc améliorée ainsi que la résistance du micro-réseau face aux défaillances d'équipements.

Selon un deuxième aspect, il est également proposé une installation électrique comprenant au moins un tel micro-réseau dont ledit au moins un premier appareil de chauffage est raccordé électriquement à une source d'alimentation électrique délivrant une tension électrique continue et comprenant tout ou partie des éléments suivants : des panneaux photovoltaïques, une pile à combustible, une supercapacité, une batterie à base d'un assemblage de cellules électrochimiques, une éolienne.

## Description sommaire des dessins

L'invention sera bien comprise à l'aide de la description qui suit de modes particuliers de réalisation de l'invention donnés à titre d'exemples non limitatifs et représentés sur les dessins annexés, dans lesquels :

La figure 1 est une vue schématique d'un micro-réseau comprenant une pluralité d'appareils de chauffage de type radiateur électrique, adaptés à être couplés à une source d'alimentation en énergie électrique et pourvus chacun d'un dispositif de stockage d'énergie électrique, selon une première topologie.
La figure 2 est une vue schématique d'un micro-réseau comprenant une pluralité d'appareils de chauffage de type radiateur électrique, adaptés à être couplés à une source d'énergie électrique et pourvus chacun d'un dispositif de stockage d'énergie électrique, selon une deuxième topologie.
La figure 3 est une vue schématique des composants d'un exemple d'appareil de chauffage utilisable dans chacun des micro-réseaux des figures 1 et 2.

## Description détaillée

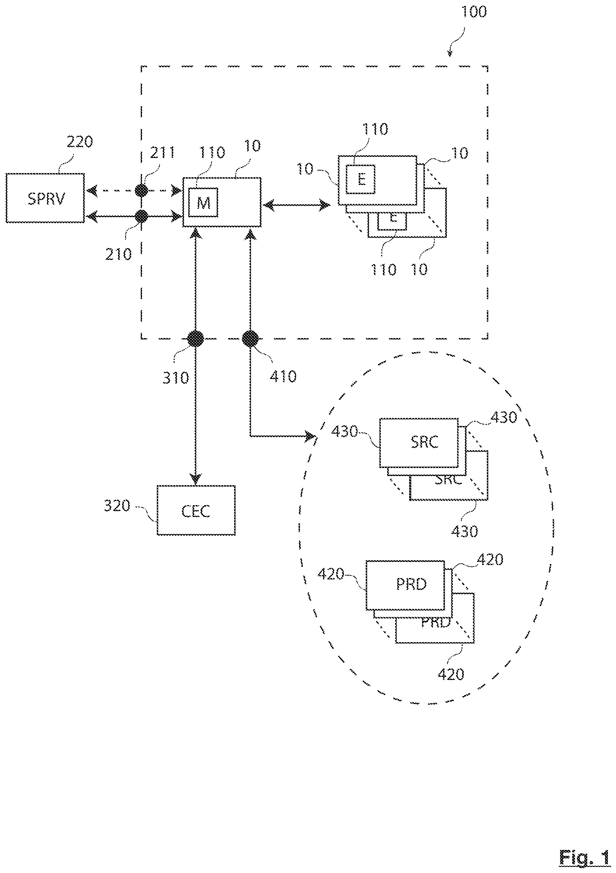

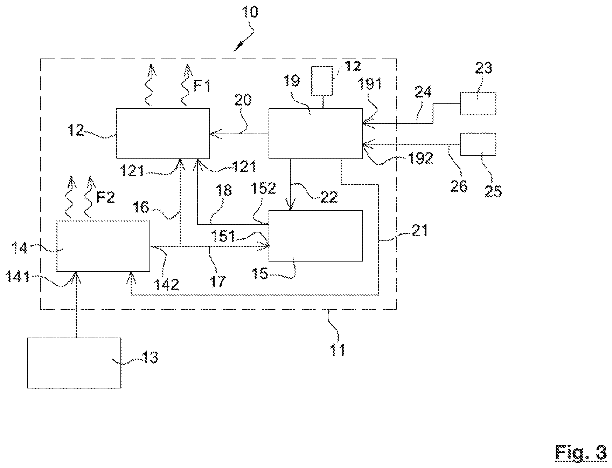

On se réfère à la figure 1 sur laquelle est représenté un micro-réseau 100 comprenant une pluralité d'appareils de chauffage 10 de type radiateur électrique. Chaque appareil de chauffage 10 est adapté à être couplé à une source d'alimentation en énergie électrique repérée 13 sur la figure 3. Comme détaillé plus loin, la source d'alimentation en énergie électrique 13 peut inclure un réseau électrique délivrant une tension alternative et/ou des éléments fournisseurs délivrant une tension continue. Chacun des appareils électriques 10 est équipé d'un dispositif de stockage d'énergie électrique 15 apte à être électriquement rechargé à partir de la source d'alimentation électrique 13. Chaque appareil de chauffage 10 du micro-réseau 100 est en particulier apte à mesurer, préférablement en temps réel, la puissance électrique qu'il consomme et qu'il produit, c'est-à-dire qu'il est susceptible de libérer. Plus précisément, chaque appareil de chauffage 10 du micro-réseau 100 est apte à établir, par mesure directe ou détermination :

- une mesure relative à une consommation électrique de cet appareil de chauffage 10 où cette consommation électrique de cet appareil de chauffage 10 est définie comme étant une quantité d'énergie électrique transmise à cet appareil de chauffage 10 par la source d'alimentation électrique,
- au moins une mesure relative à une production électrique de cet appareil de chauffage 10 où cette production électrique de cet appareil de chauffage 10 est définie comme étant une quantité d'énergie électrique consommée par cet appareil de chauffage 10 à partir de son dispositif de stockage d'énergie électrique,
- et au moins une mesure relative à un état de charge réel de son dispositif de stockage d'énergie électrique 15.

Avantageusement, la pluralité d'appareils de chauffage 10 comporte des appareils de chauffage 10 tels que décrits dans les demandes de brevet EP-A1-3384727 ou FR-A1-3059199.

Chaque appareil de chauffage 10 comporte un module de communication 110 apte à permettre l'accès à un réseau tel que le micro-réseau 100. Le module de communication 110 permet notamment, à l'appareil de chauffage 10 auquel il est couplé, de s'identifier sur le micro-réseau 100, de transmettre des données à destination des autres appareils de chauffage 10 ayant rejoint le micro-réseau 100, et de recevoir des données envoyées par les autres appareils de chauffage 10 ayant rejoint le micro-réseau 100. Le module de communication 110 peut être configuré pour permettre l'établissement de liaisons de données par ondes radio et pour permettre de rejoindre le micro-réseau 100 lorsque ce dernier comprend un réseau sans-fil, par exemple en mettant en oeuvre un ou plusieurs protocoles de communication sans fil régis par les normes du groupe IEEE 802.11 (ISO/CEI 8802-11), et désigné par l'acronyme Wi-Fi. Le module de communication 110 peut aussi être configuré pour permettre l'établissement de liaisons de données filaires et pour permettre de rejoindre le micro-réseau 100 lorsque ce dernier comprend un réseau filaire, par exemple en mettant en oeuvre un ou plusieurs protocoles de communication adaptés à l'utilisation de courants porteurs en ligne (désigné couramment par le sigle CPL) pour établir un réseau informatique sur le réseau électrique local d'un site.

Chaque module de communication 110 est configuré pour opérer dans un mode maître et dans un mode esclave. Chaque module de communication 110 opère exclusivement à un instant donné selon un seul de ces deux modes, à savoir soit le mode maître, soit le mode esclave. Chaque module de communication 110 peut être reconfiguré, préférentiellement par une opération de configuration standard au moyen d'une interface utilisateur appropriée, pour opérer dans l'autre mode.

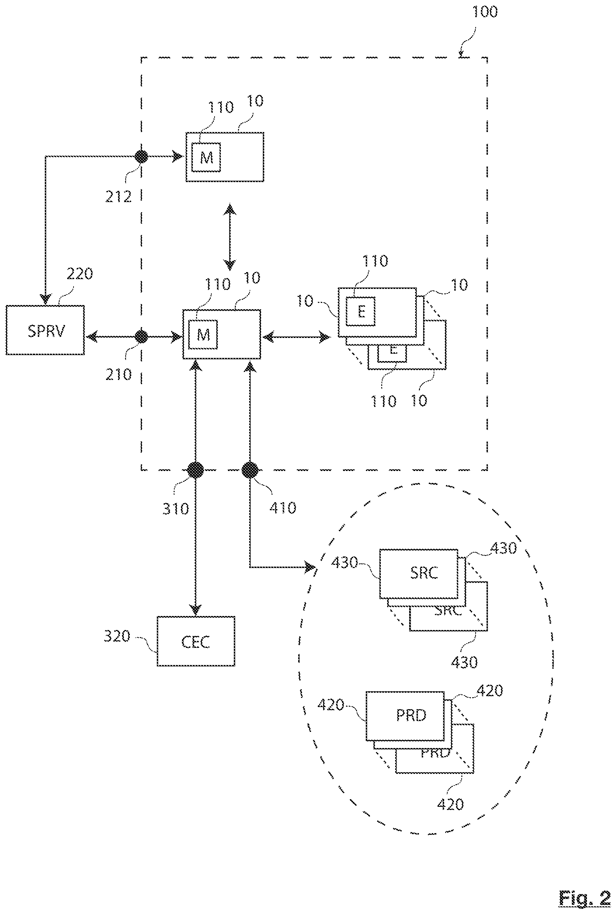

Selon la topologie, le micro-réseau 100 peut comporter soit un unique module de communication 110 opérant en mode maître, les autres modules de communication opérant en mode esclave (un exemple d'une telle topologie étant illustré par la Figure 1), soit alternativement une pluralité de modules de communication 110 opérant en mode maître, les autres modules de communication opérant en mode esclave (un exemple d'une telle topologie étant illustré par la Figure 2). En outre, par souci de concision, sur les figures 1 et 2, est représenté un unique micro-réseau 100. Il est bien entendu possible, notamment pour des sites comportant un nombre important d'appareils de chauffage 10 ou encore ayant des spécificités topographiques telles qu'une large étendue ou encore des contraintes de sécurité particulières, de faire cohabiter une pluralité de micro-réseaux 100 comportant des appareils de chauffage 10 couplés à un même réseau électrique.

Dans l'exemple de la figure 1, l'un des modules de communication 110 est configuré pour opérer en mode maître sur le micro-réseau 100, ce dernier est identifié sur la figure 1 par la lettre « M ». Les autres modules de communication 110 sont configurés pour opérer en mode esclave, et identifiés sur la figure 1 par la lettre « E ».

En mode esclave, chaque module de communication 110 est configuré pour collecter un ensemble d'informations relatives à l'état, à l'environnement et aux capacités de l'appareil de chauffage 10 auquel ledit module de communication 110 est couplé, notamment une ou plusieurs informations parmi la liste non exhaustive suivante:

- une information telle qu'un identifiant unique permettant d'identifier sur le micro-réseau 100 l'appareil de chauffage 10 muni du module de communication 110 ;
- une mesure de la puissance consommée par l'appareil de chauffage 10 ;
- une mesure de la puissance produite par l'appareil de chauffage 10, c'est-à-dire la puissance libérée à partir de son dispositif de stockage d'énergie électrique ;
- un état de charge du dispositif de stockage d'énergie électrique 15 de l'appareil de chauffage 10 ;
- une mesure de la température de l'environnement de l'appareil de chauffage 10 ;
- une consigne de température ;
- une information relative à la présence ou à l'absence d'un usager.

En mode maître ou en mode esclave, chaque module de communication 110 est également configuré pour transmettre au moins ladite mesure relative à la consommation électrique de l'appareil de chauffage 10 couplé au module de communication 110 (par exemple une puissance instantanée consommée ou une puissance consommée sur une période temporelle déterminée à partie de la source d'alimentation 13), et au moins une mesure de ladite production électrique de l'appareil de chauffage 10 couplé au module de communication 110 (par exemple une puissance instantanée produite ou une puissance produite sur une période temporelle déterminée par décharge électrique à partir du dispositif de stockage d'énergie électrique 15). La collecte et/ou la transmission de tout ou partie de l'ensemble d'informations relatives à l'état, à l'environnement et aux capacités de l'appareil de chauffage 10 auquel le module de communication 110 est avantageusement réalisé en temps réel, c'est-à-dire à intervalles temporels adaptés au suivi desdites informations et à leur traitement.

Le module de communication 110 en mode maître est configuré pour recevoir la mesure relative à la consommation électrique et la mesure relative à la production électrique associées à chaque appareil de chauffage du micro-réseau 100, ainsi que les autres informations collectées et transmises par le ou les modules de communication 110 opérant en mode esclave.

Le module de communication 110 en mode maître est apte, par l'intermédiaire d'un deuxième point d'accès 310 accessible via le micro-réseau 100, à recevoir des données d'un compteur électrique communicant 320, déployé sur le réseau électrique auquel les appareils de chauffage 10 du micro-réseau 100 sont couplés. Le module de communication 110 en mode maître peut par exemple s'assurer que le compteur électrique communicant 320 est bien rattaché au réseau électrique alimentant les appareils de chauffage 10 du micro réseau 100 au moyen d'un identifiant propre au compteur électrique communicant 320, accessible par l'intermédiaire du deuxième point d'accès. Par exemple, le module de communication 110 peut comparer une adresse de réseau ou un identifiant unique propre au compteur électrique communicant 320, à une liste blanche d'identifiants uniques et/ou d'adresses acceptés par le micro réseau 100 ou à un schéma auquel doit répondre les identifiants uniques et/ou les adresses acceptés par le micro réseau 100. Le module de communication 110 peut être configuré pour accéder au deuxième point d'accès 310 en établissant une liaison de communication sans fil, par exemple en mettant en oeuvre un ou plusieurs protocoles de communication sans fil et/ou en établissant une liaison de communication filaire, par exemple en mettant en oeuvre un ou plusieurs protocoles de communication adaptés à l'utilisation de courants porteurs en ligne pour établir un réseau informatique sur le réseau électrique local d'un site. Le deuxième point d'accès 310 est par exemple un dispositif apte à permettre l'établissement de communication avec le compteur électrique communicant 320. Selon le type de compteur électrique communicant 320, le deuxième point d'accès 310 est par exemple un point d'accès sans fil, ou une passerelle pour accéder à un réseau auquel le compteur électrique communicant 320 est couplé.

Le module de communication 110 en mode maître est configuré pour collecter, préférablement en moins de quelques secondes, par l'intermédiaire du deuxième point d'accès 310, un ensemble d'informations fournies par le compteur électrique communicant 320, relatives au réseau électrique auquel les appareils de chauffage 10 du micro-réseau 100 sont couplés, notamment une ou plusieurs informations parmi la liste non exhaustive suivante : une information relative à l'énergie fournie et/ou consommée sur le réseau électrique, une mesure de puissance, une information sur une puissance souscrite, un créneau tarifaire, etc.

Le module de communication 110 en mode maître comprend une unité de traitement apte à permettre le traitement, le filtrage et l'agrégation des données reçues des appareils de chauffage 10, du compteur électrique communicant 320, ainsi qu'à partir de ces propres informations et données (en particulier, sa propre consommation et/ou sa propre production d'énergie et les données relatives à son environnement et son état) pour produire un ensemble de données locales consolidées.

Le module de communication 110 en mode maître est apte, par l'intermédiaire d'un premier point d'accès 210 accessible via le micro-réseau 100, à transmettre des données vers un module de supervision 220 et à recevoir des données du module de supervision 220. Le module de communication 110 en mode maître peut par exemple s'assurer que le module de supervision 220 et/ou le premier point d'accès 210 sont légitimes à recevoir des informations relatives notamment aux appareils de chauffage 10 du micro réseau 100 au moyen d'un identifiant propre au module de supervision 220 et/ou au premier point d'accès 210. Par exemple, le module de communication 110 peut comparer une adresse de réseau ou un identifiant unique propre au module de supervision 220 et/ou au premier point d'accès 210, à une liste blanche d'identifiants uniques et/ou d'adresses acceptés par le micro réseau 100 ou à un schéma auquel doit répondre les identifiants uniques et/ou les adresses acceptés par le micro réseau 100. Le module de communication 110 en mode maître est en particulier apte, par l'intermédiaire d'un premier point d'accès 210 accessible via le micro-réseau 100, à transmettre l'ensemble de données locales consolidées au module de supervision 220. Le module de communication 110 peut être configuré pour accéder au premier point d'accès 210 en établissant une liaison de communication sans fil, par exemple en mettant en oeuvre un ou plusieurs protocoles de communication sans fil régis par les normes du groupe IEEE 802.11 (ISO/CEI 8802-11) et/ou en établissant une liaison de communication filaire, par exemple en mettant en oeuvre un ou plusieurs protocoles de communication adaptés à l'utilisation de courants porteurs en ligne pour établir un réseau informatique sur le réseau électrique local d'un site. Le premier point d'accès 210 est par exemple un dispositif apte à permettre l'établissement de communication bidirectionnelles avec le module de supervision 220. Selon la nature du module de supervision 220, le premier point d'accès 210 est par exemple un point d'accès à Internet tel qu'une passerelle domestique d'un fournisseur d'accès à Internet, un routeur pour accéder à un réseau auquel le module de supervision 220 est couplé, une interface électrique couplée au module de supervision 220.

Avantageusement, le module de communication 110 en mode maître peut encore être apte, par l'intermédiaire d'un premier point d'accès de secours 211 accessible via le micro-réseau 100, à transmettre des données vers le module de supervision 220 et à recevoir des données du module de supervision 220, lorsque le premier point d'accès 210 ne permet pas d'établir une connexion fonctionnelle avec le module de supervision 220. Le premier point d'accès de secours 211 est par exemple un dispositif, apte à permettre l'établissement de communication bidirectionnelles avec le module de supervision 220, de type passerelle vers un réseau de téléphonie mobile.

Avantageusement, le module de communication 110 en mode maître peut encore être apte à stocker des données ne pouvant être transmises au module de supervision 220, lorsque le premier point d'accès 210 ne permet pas d'établir une connexion fonctionnelle avec le module de supervision 220, et à transmettre les données ainsi stockées lorsque le premier point d'accès 210 permet à nouveau d'établir une connexion fonctionnelle avec le module de supervision 220.

Le module de supervision 220 est typiquement déployé sur un site distant de celui dans lequel le micro-réseau 100 est installé. Le module de supervision 220 peut être inclus dans un système informatique de type serveur. Alternativement, le module de supervision 220 peut être déployé dans au moins un équipement installé sur le site accueillant le micro-réseau 100, par exemple dans au moins l'un des appareils de chauffage 10.

Dans un mode de réalisation, chaque module de communication 110 est configuré pour déterminer son appartenance au micro réseau 100 au moyen d'un identifiant propre à l'appareil de chauffage 10 avec lequel ledit module de communication 110 est couplé ou un sous-composant de ce dernier tel qu'un composant du dispositif de stockage d'énergie électrique 15. Par exemple, le module de communication 110 peut comparer une adresse de réseau ou un identifiant unique propre à l'appareil de chauffage 10 avec lequel ledit module de communication 110 est couplé, à une liste blanche d'identifiants uniques et/ou d'adresses acceptés par le micro réseau 100 ou à un schéma auquel doit répondre les identifiants uniques et/ou les adresses acceptés par le micro réseau 100.

Dans un mode de réalisation, le module de communication 110 en mode maître est apte, par l'intermédiaire d'un troisième point d'accès 410 accessible via le micro-réseau 100, à obtenir la production électrique produite par au moins un dispositif de production 420 d'électricité couplé au réseau électrique alimentant les appareils de chauffage et/ou à obtenir la puissance électrique consommée par au moins un dispositif consommateur 430 d'électricité couplé au réseau électrique alimentant les appareils de chauffage 10. Le module de communication 110 en mode maître peut en outre être apte, par l'intermédiaire du troisième point d'accès 410, à collecter un ensemble d'informations relatives à l'état, à l'environnement et aux capacités dudit au moins un dispositif de production 420 et/ou dudit au moins un dispositif consommateur 430.

Chaque module de communication 110 est ainsi configuré pour transmettre la puissance électrique qu'il consomme et qu'il produit ainsi que les informations collectées à un ou plusieurs modules de communication 110 opérant en mode maître. La collecte et/ou la transmission de tout ou partie de l'ensemble d'informations relatives à l'état, à l'environnement et aux capacités de l'appareil de chauffage 10 auquel le module de communication 110 est avantageusement réalisée en temps réel, c'est-à-dire à intervalles temporels adaptés au suivi desdites informations et à leur traitement.

Typiquement, le dispositif de production 420 et/ou le dispositif consommateur 430 sont installés sur le site accueillant le micro-réseau 100, et couplés au même réseau électrique que le compteur électrique communicant 320. Le dispositif de production 420 peut par exemple être une station de recharge de véhicule électrique, un chauffage collectif pourvu d'une source d'énergie, un système production photovoltaïque, etc. Le dispositif consommateur 430 est un dispositif alimenté par le réseau électrique.

Le module de communication 110 en mode maître est apte à collecter notamment une ou plusieurs informations parmi la liste non exhaustive suivantes, relative audit au moins un dispositif de production 420 et/ou audit au moins un dispositif consommateur 430 :

- une information telle qu'un identifiant unique permettant d'identifier le dispositif de production 420 et/ou le dispositif consommateur 430 ;
- une mesure de la puissance active relative au dispositif de production 420 et/ou au dispositif consommateur 430 ;
- un état de charge d'une ou plusieurs sources de stockage de l'énergie du dispositif de production 420 ;
- une mesure relative à l'environnement du dispositif de production 420 et/ou du dispositif consommateur 430 ;
- une information relative à la présence ou non d'un usager; etc.

Ainsi, le module de supervision 220 dispose de l'ensemble de données locales consolidées transmis par le module de communication 110 en mode maître, relatif notamment aux appareils de chauffage 10 du micro-réseau 100, au réseau électrique du site tels que reçus du compteur électrique communicant 320, et éventuellement des dispositifs consommateurs 430 et/ou dispositif de production 420.

Le module de supervision 220 peut en outre être configuré pour obtenir un ensemble de données globales relatif au réseau électrique et/ou au gestionnaire du réseau électrique, en particulier des informations sur les aspects de gestion du service de fourniture d'électricité, l'état actuel et/ou les capacités du réseau électrique à une échelle supérieure à celle du site dans lequel se situe le micro-réseau 100, la disponibilité et la charge du réseau électrique, etc.

Le module de supervision 220 est configuré pour transmettre au module de communication 110 en mode maître une première consigne d'état de charge relative à un état de charge cible requis pour le dispositif de stockage d'énergie électrique 15 de chacun des appareils de chauffage 10 associés aux modules de communication 110 en mode esclave. Le module de communication 110 en mode maître est apte à recevoir, traiter puis transmettre ces premières consignes aux modules de communication 110 en mode esclave. Chaque module de communication 110 en mode esclave commande ensuite l'alimentation de l'organe de chauffe 12 de l'appareil de chauffage 10 auquel il est associé à partir de son dispositif de stockage d'énergie électrique 15 et/ou à partir de la source d'énergie électrique 13, en tenant compte de la première consigne d'état de charge reçue ainsi que de la mesure relative à l'état de charge réel.

Lorsque l'appareil de chauffage 10 auquel est associé le module de communication 110 adoptant le mode maître est pourvu d'un dispositif de stockage d'énergie électrique 15, d'au moins un organe de chauffe 12 apte à être alimenté à partir de la source d'alimentation électrique 13 et/ou à partir de son dispositif de stockage d'énergie électrique 15, le module de supervision 220 est configuré de sorte à transmettre au module de communication 110 en mode maître une deuxième consigne d'état de charge relative à l'état de charge cible du dispositif de stockage d'énergie électrique 15 de cet appareil de chauffage 10. Le module de communication 110 en mode maître est configuré de sorte à recevoir cette deuxième consigne d'état de charge transmise par le module de supervision 220 et à commander l'alimentation de l'organe de chauffe 12 de l'appareil de chauffage 10 à partir du dispositif de stockage d'énergie électrique 15 du deuxième appareil de chauffage 10 et/ou à partir de la source d'alimentation d'énergie électrique 13 en tenant compte de ladite deuxième consigne d'état de charge et de la mesure relative à l'état de charge réel.

Le module de supervision 220 est encore configuré, pour émettre, par l'intermédiaire du module de communication 110 en mode maître, à destination d'un ou plusieurs appareils de chauffage 10 du micro-réseau 100, un ou plusieurs ordres d'effacement, lorsqu'au moins une condition d'effacement est satisfaite dans l'ensemble de données locales consolidées et, optionnellement dans l'ensemble de données globales relatif au réseau électrique et/ou au gestionnaire du réseau électrique.

Une condition d'effacement peut notamment correspondre au fait, pour au moins un des appareils de chauffage 10 du micro réseau 100, d'être ou de passer au-dessus d'un seuil prédéterminé de charge du dispositif de stockage d'énergie électrique 15 dudit au moins un appareil de chauffage 10.

Dans un mode de réalisation, le module de supervision 220 peut encore être configuré, pour émettre, par l'intermédiaire du module de communication 110 en mode maître, à destination d'un ou plusieurs appareils de chauffage 10 du micro-réseau 100, un ou plusieurs ordres de charge de batterie, lorsqu'au moins une condition de recharge est satisfaite dans l'ensemble de données locales consolidées et, optionnellement dans l'ensemble de données globales relatif au réseau électrique et/ou au gestionnaire du réseau électrique.

Une condition de recharge peut notamment correspondre au fait, pour au moins un des appareils de chauffage 10 du micro réseau 100, d'être ou de passer en dessous d'une valeur seuil prédéterminée de charge du dispositif de stockage d'énergie électrique 15 dudit au moins un appareil de chauffage 10.

Tant pour la condition d'effacement que pour la condition de recharge, le seuil prédéterminé de charge et la valeur prédéterminée de charge peuvent respectivement être préconfigurées, par exemple en fonction des capacités et des caractéristiques techniques des appareils de chauffage 10 et de leurs dispositifs de stockage d'énergie électrique 15. Ainsi, il est possible de fixer le seuil prédéterminé de charge et/ou la valeur prédéterminée de charge en fonction de la capacité totale, par exemple à une valeur égale à 80%. Ainsi, lorsque le dispositif de stockage d'énergie électrique d'un des appareils de chauffage 10 du micro réseau présente une mesure relative à l'état de charge réel supérieure à 80%, le module de supervision 220 émet, à destination dudit appareil de chauffage 10, un ordre d'effacement. Ledit appareil de chauffage 10 cesse alors d'utiliser comme source d'énergie l'électricité fournie par la source d'alimentation électrique 13 et emploie de l'énergie libérée par son dispositif de stockage d'énergie électrique 15. Alternativement, lorsque le dispositif de stockage d'énergie électrique 15 d'un des appareils de chauffage 10 du micro réseau présente une mesure relative à l'état de charge mesuré inférieure au niveau prédéterminé de décharge, qui est par exemple égal à 30%, le module de supervision 220 peut émettre, à destination dudit appareil de chauffage 10, un ordre de recharge. Ledit appareil de chauffage 10 cesse alors d'utiliser de l'énergie électrique libérée par le dispositif de stockage d'énergie 15 et emploie l'énergie fournie par la source d'alimentation électrique 13.

Tant pour la condition d'effacement que pour la condition de recharge, le seuil prédéterminé de charge et la valeur seuil prédéterminée de charge peuvent respectivement être dynamiques et chacun établis en fonction d'une ou plusieurs données comprises dans l'ensemble de données locales consolidées et, optionnellement dans l'ensemble de données globales relatif au réseau électrique et/ou au gestionnaire du réseau électrique. Ainsi, le seuil prédéterminé de charge et la valeur seuil prédéterminée de charge peuvent chacun être fonction de données relatives à la consommation électrique du site sur lequel sont déployés les appareils de chauffage 10 du micro réseau 100, et/ou de la disponibilité d'énergie du dispositif de production 420, et/ou de la consommation électrique sur le réseau électrique hors du site. Par exemple, il est possible de fixer le seuil prédéterminé de charge et/ou la valeur seuil prédéterminée de charge à 80% lorsque la consommation électrique du site est inférieure à un niveau prédéfini, et à 20% lorsque la consommation électrique du site est supérieure ou égale au même niveau prédéfini. Le seuil prédéterminé de charge et/ou la valeur seuil prédéterminée de charge peut également être fonction de données relatives à la température actuelle du site sur lequel sont déployés les appareils de chauffage 10 du micro réseau 100, et/ou à des informations sur les habitudes des utilisateurs des appareils de chauffage 10. Par exemple, il est possible de fixer le seuil prédéterminé de charge et/ou la valeur seuil prédéterminée de charge proportionnellement à la température actuelle du site, et de le réduire de moitié à partir sur une période journalière pendant laquelle l'utilisateur fixe habituellement une consigne de température supérieure aux autres périodes journalières. Le seuil prédéterminé de charge et/ou la valeur seuil prédéterminée de charge peut également être fonction de données relatives à l'inertie thermique du bâtiment abritant les appareils de chauffage 10. Le seuil prédéterminé de charge et/ou la valeur seuil prédéterminée de charge peut également être fonction de données relatives à la capacité totale de production sur le site.

Le module de communication 110 en mode maître est configuré pour recevoir, et transmettre aux appareils de chauffage 10 concernés, les ordres d'effacement et/ou les ordres de charge, transmis par le module de supervision 220 via le deuxième point d'accès 310.

Le module de communication 110 est encore configuré pour transmettre les ordres d'effacement et/ou les ordres de charge reçus aux divers organes et composants de l'appareil de chauffage 10 couplé audit module de communication 110 aptes à faire exécuter ou mettre en oeuvre les ordres d'effacement et/ou les ordres de charge reçus.

Avantageusement, chaque appareil de chauffage 10 peut être configuré de sorte à cesser d'utiliser comme source d'énergie l'électricité fournie par la source d'alimentation électrique 13 et employer l'électricité libérée par son propre dispositif de stockage d'énergie électrique 15, lorsque la mesure relative à l'état de charge réel du dispositif de stockage d'énergie électrique 15 est ou devient supérieur à un niveau prédéterminé de charge et tant que l'ordre de charge n'est pas reçu. Chaque appareil de chauffage 10 peut également être configuré de sorte à cesser d'utiliser comme source d'énergie l'électricité fournie par son propre dispositif de stockage d'énergie électrique 15 et employer l'électricité délivrée par la source d'alimentation électrique 13, lorsque la mesure relative à l'état de charge réel du dispositif de stockage d'énergie électrique 15 est en dessous du niveau prédéterminé de décharge, et tant qu'un ordre d'effacement n'est pas reçu. Ainsi, dans le cas où la connexion entre un ou plusieurs appareils de chauffage 10 et le module de supervision 220 est temporairement perdue, les appareils de chauffage 10 peuvent appliquer une politique standard de gestion des effacements et des charges.

Une topologie alternative pour le micro-réseau 100 est représentée sur la figure 2, dans laquelle deux modules de communication 110 opèrent en mode maître, dont l'un est couplé au module de supervision 220 par l'intermédiaire d'un premier point d'accès secondaire 212. Le premier point d'accès secondaire 210 est par exemple un dispositif, apte à permettre l'établissement de communication bidirectionnelles avec le module de supervision 220, de type passerelle vers un réseau de téléphonie mobile.

Dans un mode de réalisation, si un des modules de communication 110 en mode maître ne dispose plus d'une connexion fonctionnelle au module de supervision 220, alors celui-ci est configuré pour transférer les données à transmettre au module de supervision 220 à un des modules de communication 110 en mode maître, disposant d'une connexion fonctionnelle au module de supervision 220, pour que ce dernier transmette lesdites données au module de supervision 220.

Dans un mode de réalisation, représenté sur la figure 3, chaque appareil de chauffage 10 de type radiateur électrique comprend un boîtier 11 logeant un organe de chauffe 110 produisant un premier flux de calories F1 lorsqu'une entrée 121 de l'organe de chauffe 12 est alimentée par une tension électrique continue.

L'organe de chauffe 12 peut notamment comprendre au moins un corps rayonnant et/ou au moins un dispositif de chauffage par fluide caloporteur.

L'appareil de chauffage 10 comprend un convertisseur de tension 14 implanté dans le boîtier 11 et comprenant une entrée 141 munie d'éléments de raccordement permettant de raccorder électriquement le convertisseur de tension 14 à la source d'alimentation électrique 13 et une sortie 142 délivrant une tension électrique continue apte à alimenter directement ou indirectement l'entrée 121 de l'organe de chauffe 12. Le convertisseur de tension 14 permet de transformer le courant d'entrée en provenance de la source d'alimentation électrique 13 en un courant de sortie continu directement utilisable sous cette forme par les composants que le convertisseur de tension 14 est destiné à alimenter en énergie.

La nature du convertisseur de tension 14 est directement liée à celle de la source d'alimentation électrique 13 à laquelle il est destiné à être raccordé. Notamment, le convertisseur de tension 14 peut être configuré de sorte à pouvoir délivrer, à sa sortie 142, la tension électrique continue par conversion d'une tension électrique continue appliquée à l'entrée 141 du convertisseur de tension 14 par la source d'alimentation électrique 13 lorsque le convertisseur de tension 14 est raccordé à celle-ci. Ainsi, si la source d'alimentation électrique 13 est du type délivrant une tension électrique continue, alors le convertisseur de tension 14 pourra être de type DC/DC. Alternativement, il reste toutefois envisagé que le convertisseur de tension 14 soit configuré de sorte à pouvoir délivrer, à sa sortie 142, la tension électrique continue par conversion d'une tension électrique alternative appliquée à l'entrée 141 du convertisseur de tension 14 par la source d'alimentation électrique 13 lorsque le convertisseur de tension 14 est raccordé à celle-ci. Ainsi, si la source d'alimentation électrique 13 est du type délivrant une tension électrique alternative, alors le convertisseur de tension 14 pourra être de type AC/DC.

Le convertisseur de tension 14 peut par exemple comprendre une alimentation à découpage ou plusieurs alimentations à découpage en parallèle, ou plus simplement au moins un hacheur, afin de permettre la conversion d'un courant alternatif en un courant continu directement exploitable par les composants que la sortie 142 du convertisseur de tension 14 est destinée à alimenter en énergie électrique.

L'appareil de chauffage 10 comprend typiquement le dispositif de stockage d'énergie électrique 15 fonctionnant sous un courant électrique continu, ayant une entrée 151 destinée à être alimentée par un courant continu et une sortie 152 délivrant un autre courant continu. Le dispositif de stockage 15 permet de stocker de l'énergie utilisée par l'appareil de chauffage 10, en vue d'espacer la consommation d'électricité dans le temps. Il permet en particulier de stocker de l'énergie électrique lorsque celle-ci est disponible, notamment lorsque son coût d'obtention est jugé économique.

A titre d'exemple, le dispositif de stockage d'énergie électrique 15 comprend une batterie à base d'un assemblage de cellules électrochimiques et/ou un supercondensateur.

Par ailleurs, afin de pouvoir réaliser une alimentation directe de l'organe de chauffe 12 en énergie électrique par la sortie 142 du convertisseur de tension 14, l'appareil de chauffage 10 comprend des premiers éléments de liaison 16 pour relier la sortie 142 du convertisseur de tension 14 avec l'entrée 121 de l'organe de chauffe 12 et aptes à appliquer la tension électrique continue délivrée en sortie 142 du convertisseur de tension 14 à l'entrée 121 de l'organe de chauffe 12.

En parallèle, afin de pouvoir réaliser une alimentation indirecte de l'organe de chauffe 12 en énergie électrique par la sortie 142 du convertisseur de tension 14, l'appareil de chauffage 10 comprend des deuxièmes éléments de liaison 17 pour relier la sortie 142 du convertisseur de tension 14 avec l'entrée 151 du dispositif de stockage d'énergie électrique 15 et aptes à appliquer la tension électrique continue délivrée en sortie 142 du convertisseur de tension 14 à l'entrée 151 du dispositif de stockage d'énergie électrique 15. En complément, l'appareil de chauffage 10 comprend des troisièmes éléments de liaison 18 pour relier la sortie 152 du dispositif de stockage d'énergie électrique 15 à l'entrée 121 de l'organe de chauffe 12 et aptes à appliquer la tension électrique continue délivrée à la sortie 152 du dispositif de stockage d'énergie électrique 15 à l'entrée 121 de l'organe de chauffe 12.

La nature des premiers éléments de liaison 16, des deuxièmes éléments de liaison 17 et des troisièmes éléments de liaison 18 n'est pas limitative en soi dès lors qu'elle leur permet d'être adaptés aux fonctions qui leur sont attribuées présentées ci-avant.

En outre, l'appareil de chauffage 10 comprend des éléments de commutation (non représentés en tant que tels) pour faire varier les premiers éléments de liaison 16 entre une configuration de circuit ouvert ou de circuit fermé, pour faire varier les deuxièmes éléments de liaison 17 entre une configuration de circuit ouvert ou de circuit fermé, et pour faire varier les troisièmes éléments de liaison 18 entre une configuration de circuit ouvert ou de circuit fermé.

L'appareil de chauffage 10 comprend également une unité de gestion 19 logée dans le boîtier 11, communiquant avec le module de communication 110 de cet appareil 10, et pilotant au moins l'organe de chauffe 12 via les liaisons de commande 20 (filaires ou non) et les éléments de commutation évoqués au paragraphe précédent.

L'unité de gestion 19 peut également assurer le pilotage du convertisseur de tension 14 via les liaisons de commande 21 (filaires ou non) et/ou le pilotage du dispositif de stockage d'énergie électrique 15 via les liaisons de commande 22 (filaires ou non).

Notamment, l'unité de gestion 19 assure un pilotage du convertisseur de tension 14 tel que la tension électrique continue délivrée à la sortie 142 du convertisseur de tension 14 varie en fonction de la puissance à délivrer par l'organe de chauffe 12 calculée par l'unité de gestion 19. En particulier, une telle stratégie de pilotage sera envisagée et facilitée lorsque le convertisseur de tension 14 comprend une pluralité d'alimentation à découpage en parallèle. Il est donc possible de varier la puissance délivrée par l'organe de chauffe 12 de manière simple et économique, sans avoir recours à une solution électronique complexe.

Ainsi, la tension continue délivrée par le convertisseur de tension 14 est dépendante de la tension nécessaire à l'organe de chauffe 12 ou au dispositif de stockage 15.

L'utilisation d'un convertisseur de tension 14 de type alimentation à découpage ou hacheur permet en outre d'éviter la redondance entre les fournitures en courant continu des différents composants électroniques incorporés dans l'appareil de chauffage 10 (carte métier, capteurs, affichage, etc....). Au contraire, le convertisseur de tension 14 permet d'alimenter en courant continu l'ensemble des composants électroniques. Il en résulte une simplicité de conception, un coût limité, une meilleure robustesse.

Il va de soi que la sortie 142 du convertisseur de tension 14 est également reliée à une entrée de l'unité de gestion 19 afin d'en assurer l'alimentation en énergie électrique.

Comme cela est représenté sur la Figure 1, l'appareil de chauffage 10 comprend aussi un capteur de mesure 23 apte à mesurer la température à l'extérieur du boîtier 11 et des premiers éléments de transmission 24 permettant d'adresser la valeur déterminée par le capteur de mesure 23 à une première entrée 191 de l'unité de gestion 19.

L'appareil de chauffage 10 comprend également un élément de caractérisation 25 permettant de caractériser l'état de charge du dispositif de stockage d'énergie électrique 15 et des deuxièmes éléments de transmission 26 permettant d'adresser la valeur déterminée par l'élément de caractérisation 25 à une deuxième entrée 192 de l'unité de gestion 19.

Préférentiellement, l'unité de gestion 19 assure un pilotage des éléments de commutation selon un algorithme de stratégie prédéterminé enregistré dans une mémoire de l'unité de gestion 19, en fonction de la valeur déterminée par le capteur de mesure 23 et adressée à la première entrée 191 de l'unité de gestion 191 via les premiers éléments de transmission 24 et en fonction de la valeur déterminée par l'élément de caractérisation 25 et adressée à la deuxième entrée 192 de l'unité de gestion 19 via les deuxièmes éléments de transmission 26.

L'algorithme de stratégie permet de choisir les meilleures conditions pour choisir le fonctionnement de l'organe de chauffe 12, la charge directe du dispositif de stockage 15 en courant continu ou la décharge du dispositif de stockage 15 à travers l'organe de chauffe 12 adapté au courant continu.

Selon un mode de réalisation préférentiel, l'unité de gestion 19 fait varier l'appareil de chauffage 10, par pilotage des éléments de commutation, entre :

- un premier mode de fonctionnement où les premiers éléments de liaison 16 et/ou les troisièmes éléments de liaison 18 occupent une configuration de circuit ouvert, le premier mode de fonctionnement étant occupé si la différence entre la valeur déterminée par le capteur de mesure 23 et une température de consigne connue de l'unité de gestion 19 est supérieure à un premier écart prédéterminé strictement positif,
- et un deuxième mode de fonctionnement où les premiers éléments de liaison 16 et/ou les troisièmes éléments de liaison 18 occupent une configuration de circuit fermé, le deuxième mode de fonctionnement étant occupé si la différence entre la valeur déterminée par le capteur de mesure 23 et la température de consigne connue de l'unité de gestion 19 est inférieure à un deuxième écart prédéterminé négatif ou nul.

La valeur du premier écart prédéterminé est typiquement comprise entre 1 et 3°, par exemple égal à 2°. Ainsi dans ce dernier exemple, le premier mode de fonctionnement est adopté si la température mesurée par le capteur de température 23 est supérieure d'au moins deux degrés au-delà de la température de consigne, ce qui a pour effet d'arrêter le fonctionnement de l'organe de chauffe 12.

La valeur du deuxième écart prédéterminé est typiquement comprise entre -1 et 0, par exemple égale à 0. Ainsi dans ce dernier exemple, le deuxième mode de fonctionnement est adopté si la température mesurée par le capteur de température 23 est inférieure ou égale à la température de consigne, ce qui a pour effet de débuter la chauffe de la pièce par l'organe de chauffe 12.

Par ailleurs, en parallèle de ces stratégies de pilotage déjà décrites en relation avec les premier et deuxième modes de fonctionnement, l'unité de gestion 19 fait varier l'appareil de chauffage 10, par pilotage des éléments de commutation, entre :

- un troisième mode de fonctionnement où les deuxièmes éléments de liaison 17 occupent une configuration de circuit fermé, le troisième mode de fonctionnement étant occupé si la valeur déterminée par l'élément de caractérisation 25 est inférieure ou égale à un premier seuil prédéterminé connu de l'unité de gestion 19,
- et un quatrième mode de fonctionnement où les deuxièmes éléments de liaison 17 occupent une configuration de circuit ouvert, le quatrième mode de fonctionnement étant occupé dès que la valeur déterminée par l'élément de caractérisation 25 est supérieure ou égale à un deuxième seuil prédéterminé connu de l'unité de gestion 19 et strictement supérieur au premier seuil prédéterminé.

En parallèle de ces stratégies de pilotage déjà décrites en relation avec les premier, deuxième, troisième et quatrième modes de fonctionnement, l'unité de gestion 19 fait occuper à l'appareil de chauffage 10, par pilotage des éléments de commutation, un cinquième mode de fonctionnement où les troisièmes éléments de liaison 18 occupent une configuration de circuit fermé si la valeur déterminée par l'élément de caractérisation 25 est supérieure ou égale à un troisième seuil prédéterminé connu de l'unité de gestion 19. Notamment, le troisième seuil prédéterminé est compris entre le premier seuil prédéterminé et le deuxième seuil prédéterminé.

Typiquement, le premier seuil prédéterminé est égal à 0,15 par exemple. Ainsi, le troisième mode de fonctionnement est adopté si l'état de charge du dispositif de stockage 15 est inférieur à 15%, ce qui a pour effet de faire débuter la charge du dispositif de stockage 15 afin d'éviter une décharge excessive susceptible de dégrader le dispositif de stockage 15. Alternativement ou en combinaison avec ce qui précède, l'adoption du troisième mode de fonctionnement peut éventuellement être conditionnée à la présence d'une énergie peu chère à partir de la source 13.

Le deuxième seuil prédéterminé est quant à lui typiquement supérieur à 0,9, par exemple égal à 0,95. Ainsi, le quatrième mode de fonctionnement est adopté si l'état de charge du dispositif de stockage 15 est supérieur à 95%, ce qui a pour effet d'arrêter la charge du dispositif de stockage 15 afin d'éviter une charge excessive et une usure prématurée.

Le troisième seuil prédéterminé est quant à lui compris typiquement entre 0,4 et 0,6, par exemple égal à 0,5. Ainsi, le cinquième mode de fonctionnement est adopté si l'état de charge du dispositif de stockage 15 est supérieur à 50% par exemple, ce qui a pour effet de débuter l'alimentation électrique de l'organe de chauffe 12 à partir du dispositif de stockage 15. Alternativement ou en combinaison avec ce qui précède, l'adoption du cinquième mode de fonctionnement peut éventuellement être conditionnée à l'absence d'une énergie peu chère à partir de la source 13.

Il doit bien être compris par le lecteur que l'utilisation des termes « premier mode de fonctionnement », « deuxième mode de fonctionnement », « troisième mode de fonctionnement », « quatrième mode de fonctionnement » et « cinquième mode de fonctionnement » ne confère à ceux-ci aucune propriété de priorité de l'un par rapport à l'autre et aucune propriété d'exclusion de l'un par rapport à l'autre. Au contraire, il est tout à fait possible de combiner différents modes de fonctionnement entre eux.

Le terme « état de charge » évoque une grandeur totalement connue de l'Homme du Métier, connue sous l'appellation « state of charge » selon la terminologie anglo-saxonne appropriée. Il existe de très nombreuses manières pour évaluer cet état de charge, n'apportant ici aucune limitation.

Avantageusement, le convertisseur de tension 14 comprend des dissipateurs thermiques produisant un deuxième flux de calories F2 avec les calories générées par le convertisseur de tension 14. L'organisation interne de l'appareil de chauffage 10 est telle que le deuxième flux F2 est mélangé avec le premier flux de calories F1 généré par l'organe de chauffe 12. Le deuxième flux F2 sert à la fois à un préchauffage rapide des autres composants et permet, de par son mélange avec le premier flux F1, d'optimiser le rendement énergétique de l'appareil électrique 10 en évitant que les calories produites par le convertisseur de tension 14 ne soient perdues voire gênantes. Autrement dit, la chaleur dégagée par le convertisseur de tension 14 pour la transformation du courant d'entrée en courant continu est utilisée pour le chauffage des composants et la génération de chaleur par l'appareil 10 pour éviter les pertes de rendement.

Au sein de l'installation électrique maintenant, les éléments de raccordement de l'entrée 141 du convertisseur de tension 14 sont raccordés à la source d'alimentation électrique 13. Très préférentiellement, la source d'alimentation électrique 13 délivre une tension électrique continue et comprend tout ou partie des éléments suivants : des panneaux photovoltaïques, une pile à combustible, une supercapacité, une batterie à base d'un assemblage de cellules électrochimiques, une éolienne. Cela permet d'optimiser le rendement général de l'appareil de chauffage 10 et de l'installation électrique en évitant les pertes dues classiquement aux conversions d'un courant alternatif à un courant continu. En outre, l'appareil de chauffage 10 est directement utilisable par alimentation à partir d'une source de courant continu, qui est une tendance actuelle notamment en raison du développement de la part des énergies renouvelables.

A titre d'exemple donnant satisfaction, un état de charge dit réel est mesuré indirectement à partir des mesures suivantes, relevées de manière classique par des capteurs adaptés et connus :

- mesure de la tension aux bornes du dispositif de stockage d'énergie électrique 15 lorsque celui-ci est une batterie : un système de gestion de batterie (autrement connu sous le nom de « Battery Management System » ou « BMS ») peut être directement connecté en filaire aux pôles positif et négatif de la batterie et mesure sa tension en temps réel,
- mesure du courant : lorsque la batterie se charge (ou se décharge), un courant traverse le système de gestion de batterie et il est agencé un composant de shunt sur ce système de gestion de batterie et qui permet de mesurer le courant.

Pour évaluer l'état de charge, le BMS s'appuie également sur un abaque prédéterminé qui associe la tension à l'état de charge tableau, cet abaque étant connu de l'unité de pilotage 19. Cet abaque décrit l'état de charge de la batterie en fonction de sa tension "à vide", c'est à dire lorsque le courant est nul. Ainsi, lorsque le courant est nul, le BMS relie la tension de la batterie à la valeur mesure dite réelle de l'état de charge que l'on trouve sur l'abaque (par interpolation) tandis que lorsque le courant est non nul, le BMS estime l'état de charge à l'aide d'une équation mathématique telle que :

$$SOC(t) = SOC(t-1) + \int_0^t \frac{I}{C_{bat}} \cdot dt$$

où SOC(t) est l'état de charge à l'instant t, en %
SOC(t-1) est l'état de charge initial, en %
I est le courant de charge et décharge, en A
t est le temps, en heure
$C_{bat}$ est la capacité de la batterie, en Ah

Pour établir la consigne d'état de charge, que ce soit en situation de décharge lorsque la mesure relative à l'état de charge est supérieur au seuil de charge ou en situation de charge lorsque la mesure relative à l'état de charge est inférieur au seuil de charge, la consigne d'état de charge peut être traduite en une consigne en puissance (qui est une quantité d'énergie électrique divisée par une période temporelle), qui elle-même deviendra nulle lorsque la mesure relative à l'état de charge réel aura atteint la consigne d'état de charge.

**Revendications**

1. Micro-réseau (100) comportant au moins :

- un premier appareil de chauffage (10) comprenant un premier dispositif de stockage d'énergie électrique (15) apte à être rechargé à partir d'une source d'alimentation électrique (13), au moins un premier organe de chauffe (12) apte à être alimenté à partir de la source d'alimentation électrique (13) et/ou à partir du premier dispositif de stockage d'énergie électrique (15), et un premier module de communication (110),
- un deuxième appareil de chauffage (10) comprenant un deuxième dispositif de stockage d'énergie électrique (15) apte à être rechargé à partir de la source d'alimentation électrique (13), au moins un deuxième organe de chauffe (12) apte à être alimenté à partir de la source d'alimentation électrique (13) et/ou à partir du deuxième dispositif de stockage d'énergie électrique (15), et un deuxième module de communication (110),
- un module de supervision (220) apte à communiquer au moins avec le deuxième module de communication (110),

micro-réseau dans lequel :

i) le premier module de communication (110) est configuré pour :

- obtenir, et transmettre au deuxième module de communication (110), un premier ensemble de données comportant :

- au moins une mesure relative à une consommation électrique du premier appareil de chauffage (10) où ladite consommation électrique du premier appareil de chauffage (10) est une quantité d'énergie électrique transmise au premier appareil de chauffage (10) par la source d'alimentation électrique,
- au moins une mesure relative à une production électrique du premier appareil de chauffage (10) où ladite production électrique du premier appareil de chauffage (10) est une quantité d'énergie électrique consommée par le premier appareil de chauffage (10) à partir du premier dispositif de stockage d'énergie électrique,
- et au moins une mesure relative à un état de charge réel du premier dispositif de stockage d'énergie électrique (15),

- commander l'alimentation du premier organe de chauffe (12) à partir du premier dispositif de stockage d'énergie électrique (15) et/ou à partir de la source d'énergie électrique (13) en tenant compte de la mesure relative à l'état de charge réel du premier dispositif de stockage d'énergie électrique (15) et d'une première consigne d'état de charge relative à un état de charge cible du premier dispositif de stockage d'énergie électrique (15),

ii) le deuxième module de communication (110) est configuré de sorte à :

- obtenir, et transmettre au module de supervision (220), le premier ensemble de données,
- obtenir et transmettre au module de supervision (220), un deuxième ensemble de données disctinct du premier ensemble de données, le deuxième ensemble de données comportant au moins une donnée relative à la source d'alimentation électrique (13) et au moins une mesure relative à un état de charge réel du deuxième dispositif de stockage d'énergie électrique (15),
- recevoir à partir du module de supervision (220), et transmettre au premier module de communication (110), ladite première consigne d'état de charge,
- recevoir, à partir du module de supervision (220), une deuxième consigne d'état de charge relative à un état de charge cible du deuxième dispositif de stockage d'énergie électrique (15),
- commander l'alimentation du deuxième organe de chauffe (12) à partir du deuxième dispositif de stockage d'énergie électrique (15) et/ou à partir de la source d'énergie électrique (13) en tenant compte de la mesure relative à l'état de charge réel du deuxième dispositif de stockage d'énergie électrique (15) et de la deuxième consigne d'état de charge,

iii) le module de supervision (220) est configuré de sorte à:

- recevoir le premier ensemble de données et le deuxième ensemble de données,
- générer à partir du premier ensemble de données et du deuxième ensemble de données, et transmettre au deuxième module de communication (110), la première consigne d'état de charge et la deuxième consigne d'état de charge.

2. Micro-réseau (100) selon la revendication 1, dans lequel le premier module de communication (110) est configuré pour commander l'alimentation du premier organe de chauffe (12) à partir du premier dispositif de stockage d'énergie électrique (15) à la réception d'un ordre d'effacement, dans lequel le deuxième module de communication (110) est configuré de sorte à transmettre, à la réception de l'ordre d'effacement à destination du premier module de communication (110), ledit ordre d'effacement au premier module de communication (110), et dans lequel le module de supervision (220) est configuré de sorte à vérifier si au moins une condition d'effacement du premier appareil de chauffage (10) est satisfaite en fonction du premier ensemble de données et du deuxième ensemble de données, et lorsque la condition d'effacement est satisfaite, transmettre au deuxième module de communication (110) ledit ordre d'effacement à destination du premier module de communication (110).

3. Micro-réseau (100) selon la revendication 2, dans lequel ladite au moins une condition d'effacement du premier appareil de chauffage (10) comporte une condition suivant laquelle la mesure relative à l'état de charge réel du premier dispositif de stockage d'énergie électrique (15) est au-dessus d'un seuil prédéterminé de charge du premier dispositif de stockage d'énergie électrique (15), fonction d'au moins l'une des données du premier ensemble de données et d'au moins l'une des données du deuxième ensemble de données.

4. Micro-réseau (100) selon l'une des revendications 2 ou 3, dans lequel le premier appareil de chauffage (10) est configuré de sorte à alimenter le premier organe de chauffe (12) à partir de la source d'énergie électrique (13) tant que la mesure relative à l'état de charge réel du premier dispositif de stockage d'énergie électrique (15) est en dessous d'un niveau prédéterminé de décharge et tant que l'ordre d'effacement n'est pas reçu.

5. Micro-réseau (100) selon l'une quelconque des revendications 1 à 4, dans lequel :

   - le premier module de communication (110) est configuré pour, sur réception d'un ordre de recharge, assurer la recharge du premier dispositif de stockage d'énergie électrique (15) à partir de la source d'énergie électrique (13),
   - le deuxième module de communication (110) est configuré de sorte à transmettre, à la réception dudit ordre de recharge à destination du premier module de communication (110), ledit ordre de recharge au premier module de communication (110),
   - le module de supervision (220) est configuré de sorte à vérifier si au moins une condition de recharge du premier dispositif de stockage d'énergie électrique (15) est satisfaite en fonction du premier ensemble de données et du deuxième ensemble de données, et lorsque la condition de recharge est satisfaite, transmettre au deuxième module de communication (110) ledit ordre de recharge à destination du premier module de communication (110).

6. Micro-réseau (100) selon la revendication 5, dans lequel ladite au moins une condition de recharge du premier dispositif de stockage d'énergie électrique (15) comporte une condition suivant laquelle la mesure relative à l'état de charge réel du premier dispositif de stockage d'énergie électrique (15) est en dessous d'une valeur seuil prédéterminée de charge du premier dispositif de stockage d'énergie électrique (15) fonction d'au moins l'une des données du premier ensemble de données et d'au moins l'une des données du deuxième ensemble de données.

7. Micro-réseau (100) selon la revendication 5 ou 6, dans lequel le premier appareil de chauffage (10) est configuré de sorte à alimenter le premier organe de chauffe (12) à partir du premier dispositif de stockage d'énergie électrique (15) tant que la mesure relative à l'état de charge réel du premier dispositif de stockage d'énergie électrique (15) est au-dessus d'un niveau prédéterminé de charge et tant que l'ordre de charge n'est pas reçu.

8. Micro-réseau (100) selon l'une quelconque des revendications 1 à 7, dans lequel le premier ensemble de données comporte au moins une des données choisie parmi la liste suivante : une information permettant d'identifier le premier appareil de chauffage (10) sur le micro-réseau (100), une mesure de la puissance consommée par le premier appareil de chauffage (10), une mesure de la température de l'environnement du premier appareil de chauffage (10), une consigne de température, une information relative à la présence ou à l'absence d'un usager.

9. Micro-réseau (100) selon l'une quelconque des revendications 1 à 8, dans lequel le deuxième module de communication (110) est configuré pour communiquer avec le module de supervision (220) par l'intermédiaire d'un premier point d'accès (210) accessible via le micro-réseau (100), et dans lequel le deuxième module de communication (110) est configuré pour communiquer avec le module de supervision (220) par l'intermédiaire d'un premier point d'accès de secours (211) accessible via le micro-réseau (110), lorsque le premier point d'accès (210) ne permet pas d'établir une connexion fonctionnelle avec le module de supervision (220).

10. Micro-réseau (100) selon l'une quelconque des revendications 1 à 9, dans lequel le deuxième module de communication (110) est apte, par l'intermédiaire d'un deuxième point d'accès (310) accessible via le micro-réseau (100), à recevoir des données d'un compteur électrique communicant (320) déployé sur la source d'énergie électrique (13), le deuxième ensemble de données comportant au moins une donnée relative à la source d'énergie électrique (13) obtenue à partir du compteur électrique communicant (320).

11. Micro-réseau (100) selon l'une quelconque des revendications 1 à 10, dans lequel le deuxième module de communication (110) est apte, par l'intermédiaire d'un troisième point d'accès (410) accessible via le micro-réseau (100), à recevoir des données d'un dispositif de production (420) d'électricité couplé à la source d'alimentation électrique (13) et/ou d'un dispositif consommateur (430) d'électricité alimenté par la source d'énergie électrique (13), le deuxième ensemble de données comportant au moins une donnée relative au dispositif de production (420) et/ou au moins une donnée relative au dispositif de consommation (430).

12. Micro-réseau (100) selon l'une quelconque des revendications 1 à 11, dans lequel le deuxième module de communication (110) est configuré pour enregistrer le premier ensemble de données et/ou le deuxième ensemble de données, lorsque la transmission du premier ensemble de données au module de supervision (220) et/ou la transmission du deuxième ensemble de données au module de supervision (220) n'est pas possible, dans lequel le deuxième module de communication (110) est configuré pour transmettre le premier ensemble de données tel qu'enregistré et/ou le deuxième ensemble de données tel qu'enregistré, une fois rétablie la possibilité de transmission du premier ensemble de données et/ou du deuxième ensemble de données au module de supervision (220).

13. Micro-réseau (100) selon l'une quelconque des revendications 1 à 12, comportant encore un troisième appareil de chauffage (10) pourvu d'un troisième module de communication (110) configuré pour communiquer avec le module de supervision (220) par l'intermédiaire d'un point d'accès secondaire (212) accessible via le micro-réseau (100), dans lequel le deuxième module de communication (110) est configuré pour transmettre au troisième module de communication (110) le premier ensemble de données et le deuxième ensemble de données, lorsque le deuxième module de communication (110) ne peut pas transmettre au module de supervision (220) le premier ensemble de données et le deuxième ensemble de données, le troisième module de communication (110) étant configuré de sorte à :

- obtenir, et transmettre au module de supervision (220) par l'intermédiaire du point d'accès secondaire (212), le premier ensemble de données et le deuxième ensemble de données,
- transmettre, sur réception d'un ordre d'effacement à destination du premier module de communication (110) par l'intermédiaire du point d'accès secondaire (212), ledit ordre d'effacement au premier module de communication (110).

14. Installation électrique comprenant au moins un micro-réseau (100) selon l'une quelconque des revendications 1 à 13 dont ledit au moins un premier appareil de chauffage (10) est raccordé électriquement à une source d'alimentation électrique (13) délivrant une tension électrique continue et comprenant tout ou partie des éléments suivants : des panneaux photovoltaïques, une pile à combustible, une supercapacité, une batterie à base d'un assemblage de cellules électrochimiques, une éolienne.

## Patentansprüche

1. Mikronetzwerk (100), mindestens beinhaltend:

- ein erstes Heizgerät (10), eine erste Speichervorrichtung für elektrische Energie (15) umfassend, die geeignet ist, von einer elektrischen Versorgungsquelle (13) aufgeladen zu werden, mindestens ein erstes Heizelement (12), das geeignet ist, von der elektrischen Versorgungsquelle (13) und/oder von der ersten Speichervorrichtung für elektrische Energie (15) versorgt zu werden, und ein erstes Kommunikationsmodul (110),
- ein zweites Heizgerät (10), eine zweite Speichervorrichtung für elektrische Energie (15) umfassend, die geeignet ist, von der elektrischen Versorgungsquelle (13) aufgeladen zu werden, mindestens ein zweites Heizelement (12), das geeignet ist, von der elektrischen Versorgungsquelle (13) und/oder von der zweiten Speichervorrichtung für elektrische Energie (15) versorgt zu werden, und ein zweites Kommunikationsmodul (110),

- ein Kontrollmodul (220), das geeignet ist, mindestens mit dem zweiten Kommunikationsmodul (110) zu kommunizieren,

Mikronetzwerk, wobei:

i) das erste Kommunikationsmodul (110) konfiguriert ist zum:

- Erhalten und Übertragen an das zweite Kommunikationsmodul (110) einer ersten Datengruppe, beinhaltend:

- mindestens eine Messung in Bezug auf einen elektrischen Verbrauch des ersten Heizgeräts (10), wobei der elektrische Verbrauch des ersten Heizgeräts (10) eine Menge elektrischer Energie ist, die von der elektrischen Versorgungsquelle an das erste Heizgerät (10) übertragen wird,
- mindestens eine Messung in Bezug auf eine elektrische Erzeugung des ersten Heizgeräts (10), wobei die elektrische Erzeugung des ersten Heizgeräts (10) eine Menge elektrischer Energie ist, die vom ersten Heizgerät (10) verbraucht wird, ausgehend von der ersten Speichervorrichtung für elektrische Energie,
- und mindestens eine Messung in Bezug auf einen tatsächlichen Ladezustand der ersten Speichervorrichtung für elektrische Energie (15),

- Steuern der Versorgung des ersten Heizelements (12) ausgehend von der ersten Speichervorrichtung für elektrische Energie (15) und/oder ausgehend von der Quelle elektrischer Energie (13) unter Berücksichtigung der Messung in Bezug auf den tatsächlichen Ladezustand der ersten Speichervorrichtung für elektrische Energie (15) und eines ersten Ladezustandssollwerts in Bezug auf einen Zielladezustand der ersten Speichervorrichtung für elektrische Energie (15),

ii) das zweite Kommunikationsmodul (110) konfiguriert ist zum:

- Erhalten und Übertragen an das Kontrollmodul (220) der ersten Datengruppe,
- Erhalten und Übertragen an das Kontrollmodul (220) einer zweiten Datengruppe, die sich von der ersten Datengruppe unterscheidet, wobei die zweite Datengruppe mindestens ein Datenelement in Bezug auf die elektrische Versorgungsquelle (13) und mindestens eine Messung in Bezug auf einen tatsächlichen Ladezustand der zweiten Speichervorrichtung für elektrische Energie (15) beinhaltet,
- Empfangen vom Kontrollmodul (220) und Übertragen an das erste Kommunikationsmodul (110) des ersten Ladezustandssollwerts,
- Empfangen vom Kontrollmodul (220) eines zweiten Ladezustandssollwerts in Bezug auf einen Zielladezustand der zweiten Speichervorrichtung für elektrische Energie (15),
- Steuern der Versorgung des zweiten Heizelements (12) ausgehend von der zweiten Speichervorrichtung für elektrische Energie (15) und/oder ausgehend von der Quelle elektrischer Energie (13) unter Berücksichtigung der Messung in Bezug auf den tatsächlichen Ladezustands der zweiten Speichervorrichtung für elektrische Energie (15) und des zweiten Ladezustandssollwerts,

iii) das Kontrollmodul (220) konfiguriert ist zum:

- Empfangen der ersten Datengruppe und der zweiten Datengruppe,
- Generieren, ausgehend von der ersten Datengruppe und der zweiten Datengruppe, und Übertragen an das zweite Kommunikationsmodul (110), des ersten Ladezustandssollwerts und des zweiten Ladezustandssollwerts.

2. Mikronetzwerk (100) nach Anspruch 1, wobei das erste Kommunikationsmodul (110) konfiguriert ist, um die Versorgung des ersten Heizelements (12) zu steuern, ausgehend von der ersten Speichervorrichtung für elektrische Energie (15), beim Empfang eines Löschbefehls, wobei das zweite Kommunikationsmodul (110) konfiguriert ist, um beim Empfang des Löschbefehls, der für das erste Kommunikationsmodul (110) bestimmt ist, den Löschbefehl an das erste Kommunikationsmodul (110) zu übertragen, und wobei das Kontrollmodul (220) konfiguriert ist, um zu prüfen, ob mindestens eine Löschbedingung des ersten Heizgeräts (10) in Abhängigkeit von der ersten Datengruppe und der zweiten Datengruppe erfüllt ist, und wenn die Löschbedingung erfüllt ist, den Löschbefehl, der für das erste Kommunikationsmodul (110) bestimmt ist, an das zweite Kommunikationsmodul (110) zu übertragen.

3. Mikronetzwerk (100) nach Anspruch 2, wobei die mindestens eine Löschbedingung des ersten Heizgeräts (10) eine Bedingung beinhaltet, wonach die Messung in Bezug auf den tatsächlichen Ladezustands der ersten Speichervorrichtung für elektrische Energie (15) über einer vorbestimmten Ladungsschwelle der ersten Speichervorrichtung für elektrische Energie (15) liegt, in Abhängigkeit von mindestens einem der Datenelemente der ersten Datengruppe und mindestens einem der Datenelemente der zweiten Datengruppe.

4. Mikronetzwerk (100) nach einem der Ansprüche 2 oder 3, wobei das erste Heizgerät (10) konfiguriert ist, um das erste Heizelement (12) ausgehend von der Quelle elektrischer Energie (13) zu versorgen, solange die Messung in Bezug auf den tatsächlichen Ladezustand der ersten Speichervorrichtung für elektrische Energie (15) unter einem vorbestimmten Entladungsniveau liegt und solange die Löschbefehl nicht empfangen wird.

5. Mikronetzwerk (100) nach einem der Ansprüche 1 bis 4, wobei:

   - das erste Kommunikationsmodul (110) konfiguriert ist, um beim Empfang eines Ladebefehls das Laden der ersten Speichervorrichtung für elektrische Energie (15) ausgehend von der Quelle elektrischer Energie (13) sicherzustellen,
   - das zweite Kommunikationsmodul (110) konfiguriert ist, um nach dem Empfang des Ladebefehls, der für das erste Kommunikationsmodul (110) bestimmt ist, den Ladebefehl an das erste Kommunikationsmodul (110) zu übertragen,
   - das Kontrollmodul (220) konfiguriert ist, um zu prüfen, ob mindestens eine Ladebedingung der ersten Speichervorrichtung für elektrische Energie (15) in Abhängigkeit von der ersten Datengruppe und der zweiten Datengruppe erfüllt ist, und wenn die Ladebedingung erfüllt ist, den Ladebefehl, der für das erste Kommunikationsmodul (110) bestimmt ist, an das zweite Kommunikationsmodul (110) zu übertragen.

6. Mikronetzwerk (100) nach Anspruch 5, wobei die mindestens eine Ladebedingung der ersten Speichervorrichtung für elektrische Energie (15) eine Bedingung aufweist, wonach die Messung in Bezug auf den tatsächlichen Ladezustand der ersten Speichervorrichtung für elektrische Energie (15) unter einem vorbestimmten Ladeschwellenwert der ersten Speichervorrichtung für elektrische Energie (15) liegt, in Abhängigkeit von mindestens einem der Datenelemente der ersten Datengruppe und mindestens einem der Datenelemente der ersten Datengruppe und mindestens einem der Datenelemente der zweiten Datengruppe.

7. Mikronetzwerk (100) nach Anspruch 5 oder 6, wobei das erste Heizgerät (10) konfiguriert ist, um das erste Heizelement (12) ausgehend von der ersten Speichervorrichtung für elektrische Energie (15) zu versorgen, solange die Messung in Bezug auf den tatsächlichen Ladezustand der ersten Speichervorrichtung für elektrische Energie (15) über einem vorbestimmten Ladungsniveau liegt und solange der Ladebefehl nicht empfangen wird.

8. Mikronetzwerk (100) nach einem der Ansprüche 1 bis 7, wobei die erste Datengruppe mindestens eines der Datenelemente beinhaltet, die aus der folgenden Liste ausgewählt werden: Eine Information, die die Identifikation des ersten Heizgeräts (10) auf dem Mikronetzwerk (100) ermöglicht, eine Messung der Leistung, die vom ersten Heizgerät (10) verbraucht wird, eine Messung der Temperatur der Umgebung des ersten Heizgeräts (10), ein Temperatursollwert, eine Information in Bezug auf die Anwesenheit oder die Abwesenheit eines Benutzers.

9. Mikronetzwerk (100) nach einem der Ansprüche 1 bis 8, wobei das zweite Kommunikationsmodul (110) für die Kommunikation mit dem Kontrollmodul (220) mittels einem ersten Zugangspunkt (210) konfiguriert ist, der über das Mikronetzwerk (100) zugänglich ist, und wobei das zweite Kommunikationsmodul (110) für die Kommunikation mit dem Kontrollmodul (220) mittels einem ersten Hilfszugangspunkt (211) konfiguriert ist, der über das Mikronetzwerk (110) zugänglich ist, wenn der erste Zugangspunkt (210) keine Herstellung einer funktionalen Verbindung mit dem Kontrollmodul (220) ermöglicht.

10. Mikronetzwerk (100) nach einem der Ansprüche 1 bis 9, wobei das zweite Kommunikationsmodul (110) geeignet ist, mittels einem zweiten Zugangspunkt (310), der über das Mikronetzwerk (100) zugänglich ist, Datenelemente von einem kommunizierenden elektrischen Zähler (320) zu empfangen, der an der Quelle elektrischer Energie (13) eingesetzt ist, wobei die zweite Datengruppe mindestens ein Datenelement in Bezug auf die Quelle elektrischer Energie (13) beinhaltet, das vom kommunizierenden elektrischen Zähler (320) erhalten wurde.

11. Mikronetzwerk (100) nach einem der Ansprüche 1 bis 10, wobei das zweite Kommunikationsmodul (110) geeignet ist mittels einem dritten Zugangspunkt (410), der über das Mikronetzwerk (100) zugänglich ist, Datenelemente von einer Elektrizität-Erzeugungsvorrichtung (420) zu empfangen, die mit der elektrischen Versorgungsquelle (13) gekoppelt ist, und/oder von einer Elektrizität-Verbrauchervorrichtung (430), die von der Quelle elektrischer Energie (13) versorgt wird, wobei die zweite Datengruppe mindestens ein Datenelement in Bezug auf die Erzeugungsvorrichtung (420) und/oder mindestens ein Datenelement in Bezug auf die Verbrauchsvorrichtung (430) beinhaltet.

**12.** Mikronetzwerk (100) nach einem der Ansprüche 1 bis 11, wobei das zweite Kommunikationsmodul (110) konfiguriert ist, um die erste Datengruppe und/oder die zweite Datengruppe aufzuzeichnen, wenn die Übertragung der ersten Datengruppe an das Kontrollmodul (220) und/oder die Übertragung der zweiten Datengruppe an das Kontrollmodul (220) nicht möglich ist, wobei das zweite Kommunikationsmodul (110) konfiguriert ist, um die erste Datengruppe in der aufgezeichneten Form und/oder die zweite Datengruppe in der aufgezeichneten Form zu übertragen, sobald die Möglichkeit der Übertragung der ersten Datengruppe und/oder der zweiten Datengruppe an das Kontrollmodul (220) wiederhergestellt ist.

**13.** Mikronetzwerk (100) nach einem der Ansprüche 1 bis 12, auch ein drittes Heizgerät (10) beinhaltend, das mit einem dritten Kommunikationsmodul (110) ausgestattet ist, das konfiguriert ist, um mit dem Kontrollmodul (220) mittels einem sekundären Zugangspunkt (212) zu kommunizieren, der über das Mikronetzwerk (100) zugänglich ist, wobei das zweite Kommunikationsmodul (110) konfiguriert ist, um dem dritten Kommunikationsmodul (110) die erste Datengruppe und die zweite Datengruppe zu übertragen, wenn das zweite Kommunikationsmodul (110) die erste Datengruppe und die zweite Datengruppe nicht an das Kontrollmodul (220) übertragen kann, wobei das dritte Kommunikationsmodul (110) konfiguriert ist zum:

- Erhalten, und Übertragen an das Kontrollmodul (220) mittels dem sekundären Zugangspunkt (212), der ersten Datengruppe und der zweiten Datengruppe,
- Übertragen, beim Empfang eines Löschbefehls, der für das erste Kommunikationsmodul (110) bestimmt ist, mittels dem sekundären Zugangspunkt (212), des Löschbefehls an das erste Kommunikationsmodul (110).

**14.** Elektrische Anlage, die mindestens ein Mikronetzwerk (100) nach einem der Ansprüche 1 bis 13 umfasst, wobei mindestens ein erstes Heizgerät (10) elektrisch an eine elektrische Versorgungsquelle (13) angeschlossen ist, die eine elektrische Gleichspannung liefert und einige oder alle der folgenden Elemente umfasst: Photovoltaikmodule, eine Brennstoffzelle, eine Superkapazität, eine Batterie auf Basis einer Baugruppe elektrochemischer Zellen, eine Windkraftanlage.

**Claims**

**1.** A micro-grid (100) including at least:

- a first heating appliance (10) comprising a first electrical energy storage device (15) adapted to be recharged from an electric power supply source (13), at least one first heater member (12) adapted to be powered from the electric power supply source (13) and/or from the first electrical energy storage device (15), and a first communication module (110),
- a second heating appliance (10) comprising a second electrical energy storage device (15) adapted to be recharged from the electric power supply source (13), at least one second heater member (12) adapted to be powered from the electric power supply source (13) and/or from the second electrical energy storage device (15), and a second communication module (110),
- a supervision module (220) adapted to communicate at least with the second communication module (110),

micro-grid wherein:

i) the first communication module (110) is configured to:

- obtain, and transmit to the second communication module (110), a first set of data including:

- at least one measurement related to an electrical consumption of the first heating appliance (10) where said electrical consumption of the first heating appliance (10) is an amount of electric power transmitted to the first heating appliance (10) by the electric power supply source,
- at least one measurement related to an electrical production of the first heating appliance (10) where said electrical production of the first heating appliance (10) is an amount of electric power consumed by the first heating appliance (10) from the first electrical energy storage device,
- and at least one measurement related to an actual state of charge of the first electrical energy storage device (15),

- control the power supply of the first heater member (12) from the first electrical energy storage device (15) and/or from the electric power source (13) taking into account the measurement related to the actual state of charge of the first electrical energy storage device (15) and of a first state of charge setpoint related to a target state of charge of the first electrical energy storage device (15),

ii) the second communication module (110) is configured so as to:

- obtain, and transmit to the supervision module (220), the first set of data,
- obtain and transmit to the supervision module (220), a second set of data distinct from the first set of data, the second set of data including at least one data related to the electric power supply source (13) and at least one measurement related to an actual state of charge of the second electrical energy storage device (15),
- receive from the supervision module (220), and transmit to the first communication module (110), said first state of charge setpoint,
- receive, from the supervision module (220), a second state of charge setpoint related to a target state of charge of the second electrical energy storage device (15),
- control the power supply of the second heater member (12) from the second electrical energy storage device (15) and/or from the electric power source (13) taking into account the measurement related to the actual state of charge of the second electrical energy storage device (15) and the second state of charge setpoint,

iii) the supervision module (220) is configured so as to:

- receive the first set of data and the second set of data,
- generate from the first set of data and the second set of data, and transmit to the second communication module (110), the first state of charge setpoint and the second state of charge setpoint.

2. The micro-grid (100) according to claim 1, wherein the first communication module (110) is configured to control the power supply of the first heater member (12) from the first electrical energy storage device (15) upon receipt of a cut-off instruction, wherein the second communication module (110) is configured so as to transmit, upon receipt of the cut-off instruction destined for the first communication module (110), said cut-off instruction to the first communication module (110), and wherein the supervision module (220) is configured so as to check whether at least one cut-off condition of the first heating appliance (10) is satisfied based on the first set of data and on the second set of data, and when the cut-off condition is satisfied, transmit to the second communication module (110) said cut-off instruction destined for the first communication module (110).

3. The micro-grid (100) according to claim 2, wherein said at least one cut-off condition of the first heating appliance (10) includes a condition according to which the measurement related to the actual state of charge of the first electrical energy storage device (15) is above a predetermined threshold of charge of the first electrical energy storage device (15), depending on at least one of the data from the first set of data and on at least one of the data from the second set of data.

4. The micro-grid (100) according to any of claims 2 or 3, wherein the first heating appliance (10) is configured so as to power the first heater member (12) from the electric power source (13) as long as the measurement related to the actual state of charge of the first electrical energy storage device (15) is below a predetermined level of discharge and as long as the cut-off instruction is not received.

5. The micro-grid (100) according to any one of claims 1 to 4, wherein:

- the first communication module (110) is configured to, upon receipt of a recharging instruction, ensure the recharging of the first electrical energy storage device (15) from the electric power source (13),
- the second communication module (110) is configured so as to transmit, upon receipt of said recharging instruction destined for the first communication module (110), said recharging instruction to the first communication module (110),
- the supervision module (220) is configured so as to check whether at least one recharging condition of the first electrical energy storage device (15) is satisfied depending on the first set of data and on the second set of data, and when the recharging condition is satisfied, transmit to the second communication module (110) said recharging instruction destined for the first communication module (110).

6. The micro-grid (100) according to claim 5, wherein said at least one recharging condition of the first electrical energy storage device (15) includes a condition according to which the measurement related to the actual state of charge of the first electrical energy storage device (15) is below a predetermined threshold value of charge of the first electrical energy storage device (15) depending on at least one of the data of the first set of data and on at least one of the data of the second set of data.

7. The micro-grid (100) according to claim 5 or 6, wherein the first heating appliance (10) is configured so as to power the first heater member (12) from the first electrical energy storage device (15) as long as the measurement related to the actual state of charge of the first electrical energy storage device (15) is above a predetermined charge level and as long as the charging instruction has not been received.

8. The micro-grid (100) according to any one of claims 1 to 7, wherein the first set of data includes at least one of the data chosen from the following list: an information item making it possible to identify the first heating appliance (10) on the micro-grid (100), a measurement of the power consumed by the first heating appliance (10), a measurement of the temperature of the environment of the first heating appliance (10), a temperature setpoint, an information item related to the presence or absence of a user.

9. The micro-grid (100) according to any one of claims 1 to 8, wherein the second communication module (110) is configured to communicate with the supervision module (220) by means of a first point access point (210) accessible via the micro-grid (100), and wherein the second communication module (110) is configured to communicate with the supervision module (220) by means of a first backup access point (211) accessible via the micro-grid (110), when the first access point (210) does not make it possible to establish a functional connection with the supervision module (220).

10. The micro-network (100) according to any one of claims 1 to 9, wherein the second communication module (110) is adapted, by means of a second access point (310) accessible via the micro-grid (100), to receive data from a smart electric meter (320) deployed on the electric power source (13), the second set of data including at least one data related to the electric power source (13) obtained from the smart electric meter (320).

11. The micro-grid (100) according to any one of claims 1 to 10, wherein the second communication module (110) is adapted, by means of a third access point (410) accessible via the micro-grid (100), to receive data from an electricity-producing device (420) coupled to the electric power supply source (13) and/or an electricity-consuming device (430) powered by the electric power source (13), the second set of data including at least one data related to the production device (420) and/or at least one data related to the consuming device (430).

12. The micro-grid (100) according to any one of claims 1 to 11, wherein the second communication module (110) is configured to record the first set of data and/or the second set of data, when the transmission of the first set of data to the supervision module (220) and/or the transmission of the second set of data to the supervision module (220) is not possible, wherein the second communication module (110) is configured to transmit the first set of data as recorded data and/or the second set of data as recorded data, once the possibility of transmitting the first set of data and/or the second set of data to the supervision module (220) has been restored.

13. The micro-grid (100) according to any one of claims 1 to 12, further including a third heating appliance (10) provided with a third communication module (110) configured to communicate with the supervision module (220) by means of a secondary access point (212) accessible via the micro-grid (100), wherein the second communication module (110) is configured to transmit to the third communication module (110) the first set of data and the second set of data, when the second communication module (110) cannot transmit to the supervision module (220) the first set of data and the second set of data, the third communication module (110) being configured so as to:

- obtain, and transmit to the supervision module (220) by means of the secondary access point (212), the first set of data and the second set of data,
- transmit, upon receipt of a cut-off instruction destined for the first communication module (110) by means of the secondary access point (212), said cut-off instruction to the first communication module (110).

14. An electrical installation comprising at least one micro-grid (100) according to any one of claims 1 to 13 in which said at least one first heating appliance (10) is electrically connected to an electric power supply source (13) delivering a direct electric voltage and comprising all or part of the following elements: photovoltaic panels, a fuel cell, a supercapacitor, an electrochemical cells assembly-based battery, and a wind turbine.

Fig. 1

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2735067 B1
- EP 2961032 B1
- WO 2019097130 A1
- EP 3384727 A1
- FR 3059199 A1